(19) Europäisches Patentamt
European Patent Office
Office européen des brevets

(11) EP 2 853 623 A1

(12) **EUROPEAN PATENT APPLICATION**
published in accordance with Art. 153(4) EPC

(43) Date of publication:
**01.04.2015 Bulletin 2015/14**

(21) Application number: **13793900.5**

(22) Date of filing: **21.05.2013**

(51) Int Cl.:
***D01F 2/00*** $^{(2006.01)}$ ***B60C 9/00*** $^{(2006.01)}$
***D02G 3/48*** $^{(2006.01)}$

(86) International application number:
**PCT/JP2013/064047**

(87) International publication number:
**WO 2013/176113 (28.11.2013 Gazette 2013/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.05.2012 JP 2012116080**
**21.05.2012 JP 2012116081**
**21.05.2012 JP 2012116082**
**21.05.2012 JP 2012116083**
**21.05.2012 JP 2012116084**

(71) Applicant: **Bridgestone Corporation**
**Tokyo 104-8340 (JP)**

(72) Inventors:
- **KOIDE Mitsuharu**
  **Kodaira-shi**
  **Tokyo 187-8531 (JP)**
- **SUGIMOTO Kenichi**
  **Kodaira-shi**
  **Tokyo 187-8531 (JP)**

(74) Representative: **Oxley, Robin John George**
**Marks & Clerk LLP**
**90 Long Acre**
**London WC2E 9RA (GB)**

# (54) CORD, RUBBER-CORD COMPOSITE STRUCTURE, AND TIRE

(57) An object of the present invention aims to provide a cord formed by twisting purified polysaccharide fibers which are manufactured by using a raw material with a low environmental impact and do not emit carbon disulfide, in which the cord is able to confer durability and resistance to external damage to a tire when the cord is used in the tire. A cord is provided formed by bringing a polysaccharide solution which is formed by dissolving a polysaccharide raw material in a liquid including an ionic liquid in contact with a solidifying liquid, and by twisting raw yarn which is purified polysaccharide fibers formed by spinning polysaccharides, in which a relationship between tenacity TB (cN/dtex) of the raw yarn at 25°C and elongation at break EB (%) of the raw yarn at 25°C satisfies the following expression (1) and the following expression (2), and a twisted yarn tenacity utilization rate (CT/TB) at the time of setting cord tenacity at 25°C to CT (cN/dtex) when the raw yarn is twisted to be a cord is greater than or equal to 70%.

$$\frac{TB}{EB^{-0.52}} \geq 13 \quad \cdots (1)$$

$$TB \times EB \leq 80 \quad \cdots (2)$$

EP 2 853 623 A1

*FIG. 1*

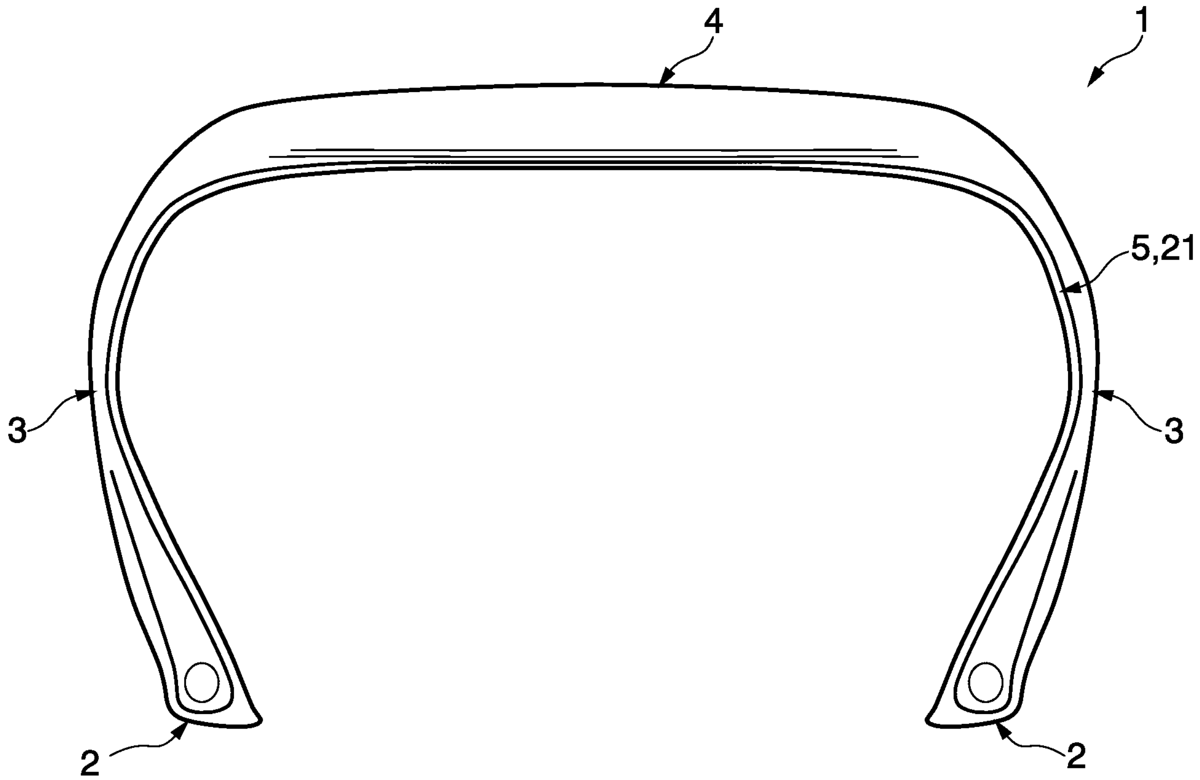

## Description

### Technical Field

The present invention relates to a cord, a rubber-cord composite structure, and a tire.

### Background Art

Cellulose fibers have excellent dimensional stability, high adhesiveness, and low temperature dependency of an elastic modulus (elastic modulus variation with respect to a temperature variation), and thus are widely used for a tire as rayon. By using rayon in a reinforcement cord layer of tires, it is possible to improve durability and steering stability during high-speed driving, and thus rayon contributes to high-performance tires, which has been required recently.

However, rayon emits carbon disulfide in a manufacturing process, and has an extremely high environmental impact, and thus does not meet the present needs of manufacturing a product with a raw material having a low environmental impact.

Characteristics such as excellent dimensional stability, high adhesiveness, and low temperature dependency of an elastic modulus largely depend on the fact that a fiber material is a cellulose raw material. Synthetic fibers such as polyester and nylon are also used as a reinforcement cord for tires, but it is difficult to obtain dimensional stability, adhesiveness, and an elastic modulus to the same degree as that of cellulose fibers.

Accordingly, rayon is still used for some tires in spite of the high environmental impact.

In recent years, global environment protection has been advocated, and it is desired to use cellulose which does not depend on a fossil fuel as a raw material. Carbon disulfide having a high environmental impact in manufacturing of the rayon which is the problem described above, is used at the time of melting or dissolving the cellulose to be fiberized (spun).

In order to melt or dissolve the cellulose raw material, it is necessary to break hydrogen bonds of hydroxyl groups in the molecules and between the molecules, in which there are 3 hydroxyl groups per repeating unit of the cellulose. In the manufacturing of rayon, the hydroxyl group is subjected to a chemical modification by carbon disulfide, and the hydrogen bonds are broken, and thus the cellulose raw material melts or dissolves. Thus, the cellulose fibers which are spun by performing chemical modification with respect to the hydroxyl group are generally called regenerated cellulose.

At present, one reason that cellulose fibers other than the rayon are not widely used in reinforced tires is because it is difficult to melt or dissolve the cellulose raw material by an industrially established method, and further, it is difficult to obtain high strength, and elongation at break at the time of performing fiberization.

In this regard, according to a manufacturing method of purified cellulose fibers (hereinafter, referred to as Lyocell) using N-methyl morpholine-N-oxide (NMMO) as a solvent, it is possible to dissolve the cellulose raw material without there being accompanying chemical modification of cellulose itself, and without emitting carbon disulfide. By using dissolved cellulose solution manufactured in this method, Lyocell obtained by performing dry-wet spinning with respect to the cellulose is advantageous in that Lyocell has a low environmental impact and a hydroxyl group subjected to the chemical modification does not remain (refer to Patent document 1).

However, Lyocell does not satisfy both of sufficient tenacity and elongation at break, and thus a function as a skeleton material of a tire is insufficient.

In general, tenacity and elongation at break are in a relationship of trade-off, and when sufficient tenacity is conferred to Lyocell, the elongation at break decreases, and in the opposite manner, when sufficient elongation at break is conferred to Lyocell, the tenacity decreases. Similarly, an initial elastic modulus and the elongation at break are also in a relationship of trade-off, and when a sufficient initial elastic modulus is conferred to Lyocell, the elongation at break decreases, and in the opposite manner, when sufficient elongation at break is applied to Lyocell, the initial elastic modulus decreases.

For example, the Lyocell disclosed in Patent Document 1 does not have sufficient elongation at break.

Further, Lyocell has low twisting convergence, and thus has poor tenacity when performing twisting. For this reason, a tenacity utilization rate after performing the twisting is approximately 70%, and thus there is still room for improvement.

However, in recent years, a performance required for a passenger vehicle tire has gradually become stricter along with a performance of a car, and steering stability is one of the most important performances. The tire using the rayon fibers described above gives a performance excellent in steering stability.

When the initial elastic modulus of the fibers is not sufficient, an adverse effect is exerted on the steering stability. In addition, when the elongation at break decreases, an input from the outside is easily cut. Accordingly, it is necessary for both of the initial elastic modulus and the elongation at break to be compatible in the purified cellulose fibers, and when any one of the initial elastic modulus and the elongation at break considerably decreases compared

to properties of the rayon which is currently used for the tire, a tire performance is impeded.

In this regard, synthetic fibers such as nylon, or polyethylene terephthalate (hereinafter, PET) are widely used as the skeleton material of the tire. However, these synthetic fibers are a fossil fuel-derived material, and thus have a high environmental impact. Further, these synthetic fibers are thermoplastic, and thus a tenacity retention rate at a high temperature is low.

In recent years, as a pneumatic tire in which emergency driving can be performed even when an air pressure inside the tire decreases, a side reinforcement type run-flat tire in which a side reinforcement rubber layer having a crescent-like cross-section is disposed in a side wall portion inside a carcass has been widely utilized.

When run-flat driving (driving with a puncture) is performed by using such a run-flat tire, a tire temperature becomes high due to heat generation in the side reinforcement rubber layer, and thus the synthetic fibers such as nylon or PET which are thermoplastic are able to melt.

In addition, the synthetic fibers such as nylon or PET have a low initial elastic modulus, and thus the tire obtained by using these synthetic fibers has low steering stability.

Further, in a pneumatic radial tire for high-speed driving, a belt reinforcement layer is arranged outside of a belt layer in a radial direction to cover at least both end portions of the belt layer. The belt reinforcement layer suppresses creeping up of the belt layer which occurs due to a centrifugal force at the time of performing high-speed rotation due to a hoop effect, and thus increases high-speed durability of the tire.

In organic fibers configuring the belt reinforcement layer, nylon is preferably used as a material, but nylon is a fossil fuel-derived material, and thus has a high environmental impact.

In addition, in order to improve the high-speed durability of the tire, it is preferable that elongation at break and an initial elastic modulus of the organic fibers used for the belt reinforcement layer be high. When a load is applied to the belt reinforcement layer, a cord formed of the organic fibers may be cut, but when the elongation at break and the initial elastic modulus of the organic fibers used for the belt reinforcement layer are high, the cord may not be cut at the time of applying the load to the belt reinforcement layer.

Thus, in fibers used at the time of obtaining a tire which is excellent in improving the high-speed durability, it is preferable that both of the elongation at break and the initial elastic modulus be compatible.

In contrast, it is known that several types of ionic liquid efficiently dissolve cellulose (refer to Patent Documents 2 to 4). Cellulose is dissolved by an ionic liquid due to solvation, and harmful substances such as the carbon disulfide are not emitted in the manufacturing process of the purified cellulose fibers. The purified cellulose fibers are easily manufactured by passing the dissolved cellulose through water, alcohol, or an aqueous solution of water and ionic liquid. The spinning of the cellulose fibers using the ionic liquid is disclosed in Patent Documents 5 and 6.

Prior art document

Patent document

[Patent Document 1] Japanese Unexamined Patent Application, First Publication No. 2006-188806
[Patent Document 2] United States Patent No. 1943176
[Patent Document 3] Japanese Unexamined Patent Application, First Publication No. S60-144322
[Patent Document 4] Japanese Patent No. 4242768
[Patent Document 5] United States Patent Application, Publication No. 2008/0269477
[Patent Document 6] Chinese Patent No. 101328626

Summary of Invention

Technical Problem

Therefore, a manufacturing method of purified cellulose fibers in which both of the tenacity and the elongation at break are compatible by using an ionic liquid is required.

The present invention has been made in view of the problems described above, and aims to provide a cord formed by twisting purified polysaccharide fibers which are manufactured by using a raw material with a low environmental impact and do not emit carbon disulfide, in which the cord is able to confer durability and resistance to external damage to a tire when the cord is used in the tire, and allows both of elongation at break and an initial elastic modulus to be compatible, and in particular, to provide a hybrid cord which is able to confer run-flat durability and steering stability to the tire.

Further, the present invention aims to provide a rubber-cord composite structure using the cord described above.

In addition, the present invention aims to provide a tire which is excellent in tire properties using the rubber-cord composite structure described above, and in particular, to provide a run-flat tire.

Solution to Problem

The present invention aims to provide a cord, a rubber-cord composite structure, and a tire which have the following features.

(1) A cord formed by bringing a polysaccharide solution which is formed by dissolving a polysaccharide raw material in a liquid including an ionic liquid in contact with a solidifying liquid, and by twisting raw yarn which is purified polysaccharide fibers formed by spinning polysaccharides, in which a relationship between tenacity TB (cN/dtex) of the raw yarn at 25°C and elongation at break EB (%) of the raw yarn at 25°C satisfies the following expression (1) and the following expression (2), and a twisted yarn tenacity utilization rate (CT/TB) at the time of setting cord tenacity at 25°C to CT (cN/dtex) when the raw yarn is twisted to be a cord is greater than or equal to 70%.

$$\frac{TB}{EB^{-0.52}} \geq 13 \quad \cdots (1)$$

$$TB \times EB \leq 80 \quad \cdots (2)$$

(2) The cord according to (1), wherein the cord is formed by twisting the raw yarn which is the purified polysaccharide fibers and fibers of a material different from the purified polysaccharide fibers, and a relationship between a raw yarn initial elastic modulus Er (%) which is calculated from a slope of stress at the time of elongation of 0.6 to 0.9% at 25°C and elongation at break EB (%) of the raw yarn at 25°C satisfies the following expression (3).

$$\frac{Er}{EB^{-0.82}} \geq 10.5 \quad (3)$$

(3) The cord according to (1), wherein a tenacity retention rate (HT/TB) of the raw yarn at the time of setting tenacity of the raw yarn at 150°C to HT (cN/dtex) is 70 to 100 (%).
(4) The cord according to (1), wherein a relationship between an elastic modulus Er (%) of the raw yarn at 25°C and the elongation at break EB (%) of the raw yarn at 25°C satisfies the following expression (3), and a percentage ratio ([Eh / Er] × 100) of an elastic modulus Eh (%) of the raw yarn at 150°C to Er (%) is 75 to 100 (%).

$$\frac{Er}{EB^{-0.82}} \geq 10.5 \quad (3)$$

(5) The cord according to (1), wherein a difference between a creep amount (%) of the raw yarn at the time of applying a load of 4 cN/dtex at 80°C and a creep amount of the raw yarn at the time of applying a load of 2 cN/dtex at 80°C is less than or equal to 2.0 (%).
(6) The cord according to (1), wherein the tenacity TB of the raw yarn at 25°C is greater than or equal to 3.8 cN/dtex.
(7) The cord according to (6), wherein the tenacity TB of the raw yarn at 25°C is greater than or equal to 5.1 cN/dtex.
(8) The cord according to (7), wherein the tenacity TB of the raw yarn at 25°C is greater than or equal to 5.4 cN/dtex.
(9) The cord according to (1), wherein the elongation at break EB (%) of the raw yarn at 25°C is greater than or equal to 8.8 %.
(10) The cord according to (9), wherein the elongation at break EB (%) of the raw yarn at 25°C is greater than or equal to 10.0%.
(11) The cord according to (1), wherein the ionic liquid is composed of a cationic moiety and an anionic moiety, and the cationic moiety is at least one selected from the group consisting of an imidazolinium ion, a pyridinium ion, an ammonium ion, and a phosphonium ion.
(12) The cord according to (11), wherein the cationic moiety is an imidazolinium ion shown by the following general

formula (1).

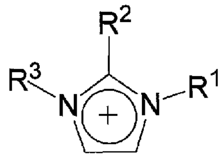

··· (1)

[wherein $R^1$ indicates a cyano group, an alkyl group having 1 to 4 carbon atoms, or an alkenyl group having 2 to 4 carbon atoms, $R^2$ indicates a hydrogen atom or a methyl group, and $R^3$ indicates a cyano group, an alkyl group having 1 to 8 carbon atoms, or an alkenyl group having 2 to 8 carbon atoms]

(13) The cord according to (11), wherein the anionic moiety is at least one selected from the group consisting of a chloride ion, a bromide ion, a formate ion, an acetate ion, a propionate ion, an L-lactate ion, a methyl carbonate ion, an amino acetate ion, an amino propionate ion, a dimethyl carbamate ion, a hydrogen sulfate ion, a methyl sulfate ion, an ethyl sulfate ion, a methane sulfonate ion, a dimethyl phosphate ion, a diethyl phosphate ion, a methyl phosphonate ion, a phosphinate ion, a thiocyanate ion, and a dicyanamide ion.

(14) The cord according to (1), wherein the ionic liquid is 1-ethyl-3-methyl imidazolium diethyl phosphate.

(15) The cord according to (2), wherein the fibers of the different material are organic fibers of which thermal shrinkage stress at 180°C is greater than or equal to 0.20 cN/dtex.

(16) The cord according to (2), wherein total fineness is 1,000 to 10,000 dtex.

(17) A rubber-cord composite structure according to (16) formed by compositing the cord according to (1), and a rubber material.

(18) The rubber-cord composite structure according to (17), wherein thermal shrinkage stress (cN/dtex) of a hybrid cord extracted from a vulcanized rubber-cord composite structure at 180°C is greater than or equal to 0.10 cN/dtex.

(19) A tire using the rubber-cord composite structure according to (17).

(20) The tire according to (19), wherein the rubber-cord composite structure according to (17) is used as a carcass ply.

(21) The tire according to (20), wherein the tire is a run-ftat tire including a pair of bead portions and a pair of side wall portions, a tread portion continuing to the pair of side wall portions, a carcass ply reinforcing each portion by extending in a toroidal shape between the pair of bead portions, and a pair of side reinforcement rubber layers with a crescent-like cross-section arranged inside the carcass of the side wall portion.

(22) The tire according to (19), wherein the tire is a tire for a motorcycle.

(23) The tire according to (22), wherein the tire includes a pair of right and left bead portions, a carcass layer formed of a ply of at least one layer extending in a toroidal shape between the bead portions, and a belt layer of at least one layer arranged in a crown portion of the carcass layer, and the rubber-cord composite structure according to (18) is used in the carcass layer and/or the belt layer.

(24) The tire according to (23), wherein the belt layer includes a circumferential spiral belt layer and/or a crossing belt layer, the circumferential spiral belt layer includes the rubber-cord composite structure of at least one layer in which the cords extending in a spiral shape in a tire circumferential direction are arranged in parallel, and the crossing belt layer has the rubber-cord composite structure of at least two layers in which the cords extending at an angle to a tire equatorial plane are arranged in parallel.

(25) The tire according to (19), wherein the tire includes a pair of right and left bead portions and a pair of right and left side wall portions, a carcass layer extending in a toroidal shape over the pair of right and left bead portions, a belt layer of at least one sheet arranged outside a crown portion of the carcass layer in a radial direction, a belt reinforcement layer arranged outside the belt layer in an approximately tire equatorial direction, and a tread portion arranged outside the belt reinforcement layer, the belt reinforcement layer includes the rubber-cord composite structure in which the cord are arranged in parallel, and the belt reinforcement layer is arranged in at least both end portions of the belt layer or the entire surface of the belt layer in an equatorial direction of a tire cross-section to be wound at 0° with respect to a tire circumferential direction.

Advantageous Effects of Invention

According to the cord of the present invention, harmful substances such as carbon disulfide are not generated, and thus it is possible to reduce the environmental impact.

In addition, the cord and the rubber-cord composite structure according to the present invention are able to confer durability, in particular, run-flat durability, steering stability, and resistance to external damage to a tire when the cord and the rubber-cord composite structure are used for the tire.

Further, the tire according to the present invention includes the rubber-cord composite structure according to

the present invention, and thus has excellent tire performance.

The tire including the cord according to the present invention allows both of elongation at break and an initial elastic modulus to be compatible.

Further, the tire according to the present invention includes the cord having excellent properties described above, and thus it is possible to improve high-speed durability.

In particular, when the cord according to the present invention is used in a run-flat tire, it is possible to suppress tire deformation at the time of performing run-flat driving, and it is possible to suppress heat generation in the side reinforcement rubber layer.

Brief Description of Drawings

FIG. 1 is a cross-sectional view schematically illustrating a tire of an embodiment according to the present invention.
FIG. 2 is a cross-sectional view schematically illustrating a run-flat tire of another embodiment according to the present invention.
FIG. 3 is a cross-sectional view schematically illustrating a tire (a tire for a motorcycle) of another embodiment according to the present invention.
FIG. 4 is a cross-sectional view schematically illustrating a tire of sill another embodiment according to the present invention.

Description of Embodiments

[Purified Polysaccharide Fibers (hereinafter, simply referred to as "raw yarn")]

Purified polysaccharide fibers used for a cord of the present invention are formed by bringing a polysaccharide solution which is formed by dissolving a polysaccharide raw material in a liquid including an ionic liquid in contact with a solidifying liquid which is a liquid other than the polysaccharide solution, and by spinning the polysaccharides.

As the polysaccharides of the polysaccharide raw material (a raw material including the polysaccharides) used in the present invention, cellulose; cellulose derivatives such as ethyl cellulose, carboxymethyl cellulose, hydroxyethyl cellulose, hydroxypropyl cellulose, methyl cellulose, nitro cellulose, and cationized cellulose; gum arabic; carrageenan such as κ-carrageenan, ɿ-carrageenan, and λ-carrageenan; guar gum; locust bean gum; pectin; tragacanth; corn starch; phosphorylated starch; microorganism-derived polysaccharides such as xanthan gum, and dextrin are included, and cellulose is preferably used.

In the present invention, it is preferable that a spinning method be wet spinning or dry-wet spinning.

The spinning method of the wet spinning or the dry-wet spinning is not particularly limited, and the polysaccharides can be spun by a known spinning method.

In the present invention, a cellulose raw material is not particularly limited insofar as the cellulose is included, and may be a plant-derived cellulose raw material, may be an animal-derived cellulose raw material, may be a microorganism-derived cellulose raw material, and may be a regenerated cellulose raw material.

As the plant-derived cellulose raw material, a natural plant-derived unprocessed cellulose raw material such as wood, cotton, linen, and other herbaceous species, and a plant-derived processed cellulose raw material such as pulp, wood powder, and a paper product which is subjected to a processing treatment in advance are included.

As the animal-derived cellulose raw material, a sea squirt-derived cellulose raw material is included.

As the microorganism-derived cellulose raw material, a cellulose raw material-producing microorganism belonging to the genus Aerobacter, a genus of Acetobacter, a genus of Achromobacter, a genus of Agrobacterium, a genus of Alacaligenes, a genus of Azotobacter, a genus of Pseudomonas, a genus of Rhizobium, a genus of Sarcina, and the like are included.

As the regenerated cellulose raw material, a cellulose raw material in which a plant-derived cellulose raw material, an animal-derived cellulose raw material, or a microorganism-derived cellulose raw material as described above is reproduced by a known method such as a viscose method is included.

Among them, as the cellulose raw material used in the present invention, pulp which dissolves excellently in the ionic liquid is preferable.

In the present invention, in order to improve solubility with respect to the ionic liquid, a pretreatment can be performed with respect to the polysaccharide raw material before the polysaccharide raw material including the cellulose or the like is dissolved in the liquid including the ionic liquid. As the pretreatment, specifically, a drying treatment, a physical pulverization treatment such as pulverization, and grinding, a chemical modification treatment using an acid or an alkali, and the like can be performed. All of these can be performed by a conventional method.

In the present invention, the ionic liquid is a salt in a liquid state at a temperature lower than or equal to 100°C, that is, exists as liquid at a temperature lower than or equal to 100°C. The ionic liquid is a solvent in which only a cationic moiety, only an anionic moiety, or both of them are configured of an organic ion.

It is preferable that the ionic liquid include the cationic moiety and the anionic moiety. The cationic moiety of the ionic liquid is not particularly limited, and may be a cationic moiety generally used in the cationic moiety of an ionic liquid.

Among them, as a preferable cationic moiety of the ionic liquid used in the present invention, a nitrogen atom-containing aromatic cation, an ammonium ion, and a phosphonium ion are included.

As the nitrogen atom-containing aromatic cation, specifically, for example, a pyridinium ion, a pyridazinium ion, a pyrimidinium ion, a pyrazinium ion, an imidazolium ion, a pyrazolium ions, an oxazolium ion, a 1,2,3-triazolium ion, a 1,2,4-triazolium ion, a thiazolium ion, a piperidinium ion, a pyrrolidinium ion, and the like are included.

Among them, as the nitrogen atom-containing aromatic cation, the imidazolinium ion, and the pyrimidinium ion are preferable, and the imidazolinium ion shown by the following general formula (C3) is more preferable.

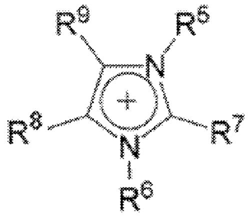

... (C3)

[wherein $R^5$ and $R^6$ are independently a cyano group, an alkyl group having 1 to 10 carbon atoms, or an alkenyl group having 2 to 10 carbon atoms, respectively, and $R^7$ to $R^9$ are independently a hydrogen atom, or an alkyl group having 1 to 10 carbon atoms, respectively].

As described above, in the formula (C3), $R^5$ and $R^6$ are independently a cyano group, an alkyl group having 1 to 10 carbon atoms, or an alkenyl group having 2 to 10 carbon atoms, respectively.

The alkyl group having 1 to 10 carbon atoms may be any one of a straight chain alkyl group, a branched chain alkyl group, and a cyclic alkyl group. The 1 to 10 carbon atoms alkyl group is preferably a straight chain alkyl group or a branched chain alkyl group, and more preferably a straight chain alkyl group.

As the straight chain alkyl group, specifically, a methyl group, an ethyl group, a propyl group, a butyl group, a pentyl group, a hexyl group, a heptyl group, an octyl group, a nonyl group, a decyl group, and the like are included.

As the branched chain alkyl group, specifically, a 1-methylethyl group, a 1,1-dimethylethyl group, a 1-methylpropyl group, a 2-methylpropyl group, a 1,1-dimethylpropyl group, a 2,2-dimethylpropyl group, a 1-methylbutyl group, a 2-methylbutyl group, a 3-methylbutyl group, a 1-methylpentyl group, a 2-methylpentyl group, a 3-methylpentyl group, a 4-methylpentyl group, and the like are included.

The cyclic alkyl group may be a monocyclic group, or may be a polycyclic group. Specifically, the cyclic alkyl group includes a monocyclic group such as a cyclopropyl group, a cyclobutyl group, a cyclopentyl group, a cyclohexyl group, a cycloheptyl group, and a cyclooctyl group, and a polycyclic group such as a norbornyl group, an adamantyl group, and an isobornyl group.

It is preferable that the number of carbon atoms of the alkyl group in $R^5$ and $R^6$ be 1 to 8. As the alkenyl group having 2 to 10 carbon atoms, in the alkyl group having 2 to 10 carbon atoms, a case where one single bond between carbon-carbon in an alkyl group having 2 to 10 carbon atoms is substituted with a double bond can be illustrated, and as a preferred example, a vinyl group, an allyl group, and the like are included. Furthermore, a position of the double bond is not particularly limited.

It is preferable that the number of carbon atoms of the alkenyl group in $R^5$ and $R^6$ be 2 to 8.

In addition, $R^5$ and $R^6$ may be identical to each other, or may be different from each other.

In the formula (C3), $R^7$ to $R^9$ are independently a hydrogen atom, or an alkyl group having 1 to 10 carbon atoms, respectively.

The alkyl group having 1 to 10 carbon atoms may be any one of a straight chain alkyl group, a branched chain alkyl group, and a cyclic alkyl group. The alkyl group having 1 to 10 carbon atoms is preferably a straight chain alkyl group or a branched chain alkyl group, and more preferably a straight chain alkyl group. Here, as the straight chain alkyl group, a branched chain alkyl group, and a cyclic alkyl group, the same alkyl groups as in the alkyl group of $R^5$ and $R^6$ are included.

The number of carbon atoms of the alkyl group in $R^7$ to $R^9$ is preferably 1 to 6, more preferably 1 to 3, and especially preferably 1.

In addition, $R^7$ to $R^9$ may be identical to each other, or may be different from each other.

A preferred specific example of the imidazolinium ion shown by the formula (C3) is indicated by the following

formula (1).

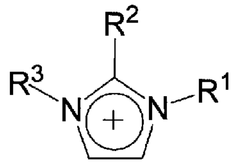

... (1)

[wherein $R^1$ indicates a cyano group, an alkyl group having 1 to 4 carbon atoms, or an alkenyl group having 2 to 4 carbon atoms, $R^2$ indicates a hydrogen atom or a methyl group, and $R^3$ indicates a cyano group, an alkyl group having 1 to 8 carbon atoms, or an alkenyl group having 2 to 8 carbon atoms].

In addition, a preferred specific example of the imidazolinium ion shown by formula (1) is indicated by the following formulas (1-1) to (1-3).

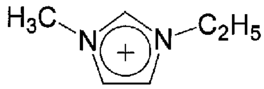

... (1-1)

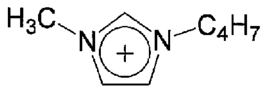

... (1-2)

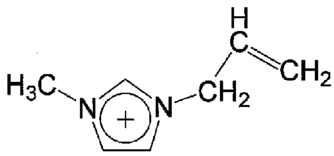

... (1-3)

The phosphonium ion is not particularly limited insofar as "$P^+$" is included, and as a preferred example of the phosphonium ion, specifically, ions shown by a general formula "$R_4P^+$ (a plurality of R's are independently a hydrogen atom, or a hydrocarbon group having 1 to 30 carbon atoms, respectively) are included.

The hydrocarbon group having 1 to 30 carbon atoms may be an aliphatic hydrocarbon group, or may be an aromatic hydrocarbon group.

It is preferable that the aliphatic hydrocarbon group be a saturated hydrocarbon group (an alkyl group), and the alkyl group may be any one of a straight chain alkyl group, a branched chain alkyl group, and a cyclic alkyl group.

As the straight chain alkyl group, an alkyl group having 1 to 20 carbon atoms is preferable, and an alkyl group having 1 to 16 carbon atoms is more preferable. Specifically, the straight chain alkyl group includes a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, and the like.

As the branched chain alkyl group, an alkyl group having 3 to 30 carbon atoms is included, an alkyl group having 3 to 20 carbon atoms is preferable, and an alkyl group having 3 to 16 carbon atoms is more preferable. Specifically, the branched chain alkyl group includes a 1-methylethyl group, a 1,1-dimethylethyl group, a 1-methylpropyl group, a 2-methylpropyl group, a 1,1-dimethylpropyl group, a 2,2-dimethylpropyl group, a 1-methylbutyl group, a 2-methylbutyl group, a 3-methylbutyl group, a 1-methylpentyl group, a 2-methylpentyl group, a 3-methylpentyl group, a 4-methylpentyl group, and the like.

As the cyclic alkyl group, an alkyl group having is included, an alkyl group having 3 to 20 carbon atoms is preferable, and an alkyl group having 3 to 16 carbon atoms is more preferable. The cyclic alkyl group may be a monocyclic group, or may be a polycyclic group. Specifically, the cyclic alkyl group includes a monocyclic group such as a cyclopropyl group, a cyclobutyl group, a cyclopentyl group, a cyclohexyl group, a cycloheptyl group, and a cyclooctyl group, and a polycyclic group such as a norbornyl group, an adamantyl group, and an isobornyl group.

It is preferable that the aromatic hydrocarbon group be an aromatic hydrocarbon group having 6 to 30 carbon atoms, and specifically, the aromatic hydrocarbon group includes an aryl group such as a phenyl group, a 1-naphthyl group, a 2-naphthyl group, a biphenyl group, and a tolyl group, and an arylalkyl group such as a benzyl group, a phenethyl

group, a naphthylmethyl group, a naphthylethyl group.

Here, the plurality of R's in the general formula "$R_4P^+$" may be identical to each other, or may be different from each other.

Among them, as a phosphonium cation, the cationic moiety shown by the following formula (C1) is preferable.

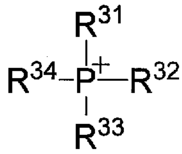
··· (C1)

In the formula, $R^{31}$ to $R^{34}$ are independently an alkyl group having 1 to 16 carbon atoms, respectively.

In the formula (C1), $R^{31}$ to $R^{34}$ are independently an alkyl group having 1 to 16 carbon atoms, respectively. The alkyl group having 1 to 16 carbon atoms may be any one of a straight chain alkyl group, a branched chain alkyl group, and a cyclic alkyl group. The alkyl group having 1 to 16 carbon atoms is preferably a straight chain alkyl group or a branched chain alkyl group, and more preferably a straight chain alkyl group. Here, as the straight chain alkyl group, the branched chain alkyl group, and the cyclic alkyl group, the same alkyl groups as described above are included.

In addition, $R^{31}$ to $R^{34}$ may be identical to each other, or may be different from each other. It is preferable that 3 or more of $R^{31}$ to $R^{34}$ be identical to each other from a viewpoint of easiness for obtaining.

Among them, in the present invention, as an alkyl group of $R^{31}$ to $R^{34}$, a straight chain alkyl group having 1 to 14 carbon atoms or branched chain alkyl group having 1 to 14 carbon atoms is preferable, a straight chain alkyl group having 1 to 10 carbon atoms or branched chain alkyl group having 1 to 10 carbon atoms is more preferable, a straight chain alkyl group having 1 to 8 carbon atoms or branched chain alkyl group having 1 to 8 carbon atoms is further preferable, and a straight chain alkyl group having 1 to 4 carbon atoms or branched chain alkyl group having 1 to 4 carbon atoms is especially preferable.

A preferred specific example of the cationic moiety shown by the formula (C1) is indicated by the following formula (C2).

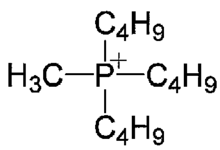
··· (C2)

In the present invention, it is more preferable that the cationic moiety be at least one selected from the group consisting of an imidazolinium ion, a pyridinium ion, an ammonium ion, and a phosphonium ion.

In the present invention, as the anionic moiety, a halogen ion, a carboxylate ion, a sulfate ion, a sulfonate ion, a phosphate ion, a phosphonate ion, and a phosphinate ion are included.

As the halogen ion, a chloride ion, a bromide ion, and an iodide ion are included, and a chloride ion and a bromide ion are preferable.

As the carboxylate ion, a formate ion, an acetate ion, a propionate ion, a butyrate ion, a hexanoate ion, a maleate ion, a fumarate ion, an oxalate ion, an L-lactate ion, a pyruvate ion, a methyl carbonate ion, an amino acetate ion, an amino propionate ion, a dimethyl carbamate ion, and the like are included, and a formate ion, an acetate ion, a propionate ion, a L-lactate ion, a methyl carbonate ion, an amino acetate ion, an amino propionate ion, and a dimethyl carbamate ion are preferable.

As the sulfate ion, a hydrogen sulfate ion, a methyl sulfate ion, an ethyl sulfate ion, an n-propyl sulfate ion, and an n-butyl sulfate ion are included, and hydrogen sulfate ion, a methyl sulfate ion, and an ethylsulfate ion are preferable.

As the sulfonate ion, a methane sulfonate ion, a toluene sulfonate ion, and a benzene sulfonate ion, and the like are included, and a methane sulfonate ion is preferable.

As the phosphate ion, ions shown by the following general formula (A1) are included.

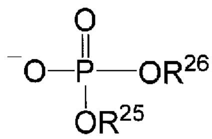
··· (A1)

[In the formula, $R^{25}$ and $R^{26}$ are independently a hydrogen atom or an alkyl group, respectively].

In the formula (A1), $R^{25}$ and $R^{26}$ are independently a hydrogen atom or an alkyl group, respectively, and the alkyl group may be any one of a straight chain alkyl group, a branched chain alkyl group, and a cyclic alkyl group. As the alkyl group, a straight chain alkyl group or a branched chain alkyl group is preferable. The number of carbon atoms of the alkyl group of $R^{25}$ and $R^{26}$ is preferably 1 to 10, more preferably 1 to 6, further preferably 1 to 4, and especially preferably 1 or 2 from a viewpoint of an industrial reason.

$R^{25}$ and $R^{26}$ may be may be identical to each other, or may be different from each other.

In the phosphate ions, a dimethyl phosphate ion and a diethylphosphate ion are preferable.

As the phosphonate ion, ions shown by the following general formula (A2) are included.

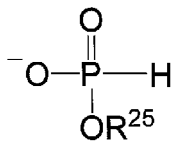

··· (A2)

[In the formula, $R^{25}$ is identical to that described above].

In the formula (A2), $R^{25}$ is identical to $R^{25}$ in the formula (A1).

In the phosphonate ions, a methyl phosphonate ion is preferable.

The phosphinate ion is shown by the following general formula (A3).

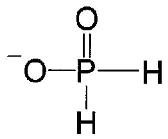

··· (A3)

In addition, as another anionic moiety, a pseudohalogen ion is also included. A pseudohalogen ion has properties similar to properties of halogen ions. As a pseudohalogen ion, a cyanate ion, an oxocyanate ion, a thiocyanate ion, and a selenocyanate ion are included.

In addition, a dicyanamide ion is included.

In the present invention, it is preferable that the anionic moiety be at least one selected from the group consisting of a chloride ion, a bromide ion, a formate ion, an acetate ion, a propionate ion, an L-lactate ion, a methyl carbonate ion, an amino acetate ions, an amino propionate ion, a dimethyl carbamate ion, a hydrogen sulfate ion, a methyl sulfate ion, an ethyl sulfate ion, a methane sulfonate ion, a dimethyl phosphate ion, a diethyl phosphate ion, a methyl phosphonate ion, a phosphinate ion, a thiocyanate ion, and a dicyanamide ion.

The ionic liquid in the present invention includes the cationic moiety and the anionic moiety described above. A combination of the cationic moiety and the anionic moiety is not particularly limited, and at least one which is able to preferably dissolve the polysaccharide raw material can be selected.

As the ionic liquid, preferably 1-allyl-3-methyl imidazolium chloride (AmimCl), 1-ethyl-3-methyl imidazolium acetate (C2mimAc), 1-ethyl-3-methyl imidazolium diethyl phosphate (C2mimDEP, $C2mim(EtO)_2PO_2$), 1-ethyl-3-methyl imidazolium methyl phosphonate (C2mimMEP, $C2mimMeOHPO_2$), or 1-ethyl-3-methyl imidazolium phosphinate ($C2mimH_2PO_2$), and the like are included, and more preferably 1-ethyl-3-methyl imidazolium diethyl phosphate is included.

In the present invention, a used amount of the ionic liquid is not particularly limited, and a concentration of the polysaccharide raw material in the polysaccharide solution is preferably 3 to 30% by mass, and more preferably 5 to 25% by mass. When the concentration of the polysaccharide raw material decreases, much of the ionic liquid drops out in a solidification process, and it is difficult to make dense fibers, and thus it is difficult to achieve tenacity of the purified polysaccharide fibers which are the raw yarn. In contrast, when the concentration of the polysaccharide raw material increases, it is possible to completely dissolve the polysaccharide raw material.

In the present invention, the liquid dissolving the polysaccharide raw material including the cellulose or the like includes the ionic liquid described above. The liquid dissolving the polysaccharide raw material may or may not contain a liquid component other than the ionic liquid. As the liquid component other than the ionic liquid, specifically, an organic solvent is included.

The organic solvent is not particularly limited insofar as the liquid component other than the ionic liquid is included, and can be suitably selected in consideration of compatibility, viscosity, or the like with respect to the ionic liquid.

Among them, as the organic solvent, at least one selected from the group consisting of an amide-based solvent, a sulfoxide-based solvent, a nitrile-based solvent, a cyclic ether-based solvent, and an aromatic amine-based solvent

is preferable.

As the amide-based solvent, N,N-dimethylformamide, N,N-dimethylacetamide, 1-methyl-2-pyrrolidone, 1-vinyl-2-pyrrolidone, and the like are included.

As the sulfoxide-based solvent, dimethyl sulfoxide, hexamethylene sulfoxide, and the like are included.

As the nitrile-based solvent, acetonitrile, propionitrile, benzonitrile, and the like are included.

As the cyclic ether-based solvent, 1,3-dioxolane, tetrahydrofuran, tetrahydropyran, 1,3-dioxane, 1,4-dioxane, 1,3,5-trioxane, and the like are included.

As the aromatic amine-based solvent, pyridine and the like are included.

When the organic solvent is used, a combination mass ratio between the ionic liquid and the organic solvent is preferably 6:1 to 0.1:1, more preferably 5:1 to 0.2:1, and further preferably 4:1 to 0.5:1. By setting the combination mass ratio to the range described above, the solvent is able to easily cause the polysaccharide raw material to swell.

In addition, a used amount of the organic solvent is not particularly limited, and is preferably 1 to 30 parts by mass, more preferably 1 to 25 parts by mass, and further preferably 3 to 20 parts by mass with respect to 1 part by mass of the polysaccharide raw material. By setting the used amount to the range described above, the polysaccharide solution is able to have suitable viscosity.

By using the organic solvent described above with the ionic liquid, solubility of the polysaccharide raw material is preferably improved.

In the present invention, a method of dissolving the polysaccharide raw material including the cellulose or the like in the liquid including the ionic liquid is not particularly limited, and for example, the liquid including the ionic liquid is brought in contact with the polysaccharide raw material, and heating or stirring is performed as necessary, and thus it is possible to obtain the polysaccharide solution.

A method of bringing the liquid including the ionic liquid in contact with the polysaccharide raw material is not particularly limited, and for example, the polysaccharide raw material may be added to the liquid including the ionic liquid, or the liquid including the ionic liquid may be added to the polysaccharide raw material.

When heating is performed at the time of dissolving the polysaccharide raw material, a heating temperature is preferably 30 to 200°C, and more preferably 70 to 180°C. By performing heating, the solubility of the polysaccharide raw material including the cellulose or the like is further preferably improved.

A stirring method is not particularly limited, and the liquid including the ionic liquid and the polysaccharide raw material may be mechanically stirred by using a stirrer, a stirring blade, a stirring rod, and the like, and the liquid including the ionic liquid and the polysaccharide raw material may be enclosed in a hermetic container, and may be stirred by shaking the container. A stirring time is not particularly limited, and it is preferable that stirring be performed until the polysaccharide raw material is suitably dissolved.

In addition, when the liquid including the ionic liquid includes the organic solvent in addition to the ionic liquid, the organic solvent and the ionic liquid may be mixed in advance, the ionic liquid and the polysaccharide raw material may be mixed, and then may be dissolved by adding the organic solvent, and the organic solvent and the polysaccharide raw material may be mixed, and then may be dissolved by adding the ionic liquid.

Among them, it is preferable that the organic solvent and the ionic liquid be mixed in advance, and then this mixed liquid be manufactured. At this time, it is preferable that the organic solvent and the ionic liquid be stirred while being heated at 70 to 180°C for approximately 5 to 30 minutes until the liquid including the ionic liquid becomes homogeneous such that the organic solvent and the ionic liquid are homogeneously mixed.

The polysaccharide solution for the ionic liquid obtained thereby may include a filler such as carbon nanotubes, clay, silica, a surfactant, or an additive such as an anti-aging agent as necessary.

The polysaccharide solution obtained thereby is brought in contact with the solidifying liquid which is a liquid other than the polysaccharide solution, and the polysaccharides are solidified, and thus it is possible to spin the polysaccharides by a known spinning method such as dry-wet spinning, and wet spinning.

Dry-wet spinning is a method in which a polysaccharide solution generally discharged from a spinning spinneret once into a gas is introduced into a solidifying tank including the solidifying liquid therein, and the polysaccharides are spun, and wet spinning is a method in which polysaccharides discharged from a spinning spinneret disposed in a solidifying tank are spun.

The solidifying tank is a bath in which the solidifying liquid for solidifying the polysaccharides is contained. As the solidifying liquid, at least one selected from the group consisting of water, a polar solvent, and the ionic liquid described above is preferable.

As the polar solvent, tetrahydrofuran, acetone, acetonitrile, N,N-dimethylformamide, dimethyl sulfoxide, acetic acid, 1-butanol, 2-propanol, 1-propanol, ethanol, methanol, formic acid, and the like are included.

[Cord]

A cord of the present invention is obtained by twisting the purified polysaccharide fibers described above.

In the cord of the present invention, a relationship between tenacity TB (cN/dtex) of the raw yarn at 25°C and elongation at break EB (%) of the raw yarn at 25°C satisfies the following expression (1) and the following expression (2), and a twisted yarn tenacity utilization rate (CT/TB) at the time of setting tenacity of the cord formed by twisting the raw yarn at 25°C to CT (cN/dtex) is greater than or equal to 70%.

$$\frac{TB}{EB^{-0.52}} \geq 13 \quad \cdots (1)$$

$$TB \times EB \leq 80 \quad \cdots (2)$$

The tenacity TB of the raw yarn at 25°C is preferably greater than or equal to 3.8 cN/dtex, more preferably greater than or equal to 5.1 cN/dtex, and especially preferably greater than or equal to 5.4 cN/dtex.

When the tenacity TB of the raw yarn is greater than or equal to 3.8 cN/dtex, exposure of the cord after performing run-flat driving is reduced, and it is difficult for fluff or the like to occur in the tire using the purified polysaccharide fibers as the raw yarn.

In addition, the elongation at break EB (%) of the raw yarn at 25°C is preferably greater than or equal to 8.8%, and more preferably greater than or equal to 10.0%.

The cord using the purified polysaccharide fibers which does not satisfy the expression (1) is not able to maintain strength of the tire.

In addition, the purified polysaccharide fibers satisfying the expression (2) have high productivity with few problems such as thread breakage at the time of production. In this regard, the purified polysaccharide fibers which do not satisfy the expression (2) can be produced at low-volume, but have many problems such as thread breakage and extremely low productivity, and thus mass production is difficult.

Among the cords described above, a cord of which a relationship between an initial elastic modulus Er (%) of the raw yarn calculated from stress at the time of elongation of 0.6 to 0.9% at 25°C and the elongation at break EB (%) of the raw yarn at 25°C satisfies the following Expression (3) is preferable.

$$\frac{Er}{EB^{-0.82}} \geq 10.5 \quad (3)$$

When the relationship between the initial elastic modulus Er (%) of the raw yarn which is the purified polysaccharide fibers and the elongation at break EB (%) of the raw yarn satisfies the expression (3) described above, steering stability is improved, and it is difficult for the purified polysaccharide fibers to be cut with respect to inputs from the outside.

Further, among the cords described above, a cord of which a tenacity retention rate (HT/TB) at the time of setting the tenacity of the purified polysaccharide fibers at 150°C to HT (cN/dtex) is 70 to 100 (%) is preferable.

Further, among the cords described above, a cord of which the relationship between the elastic modulus Er (%) of the raw yarn at 25°C and the elongation at break EB (%) of the raw yarn at 25°C satisfies the expression (3) described above, and a percentage ratio ([Eh / Er] × 100) of the elastic modulus Eh (%) at 150°C with respect to Er (%) is 75 to 100 (%) is preferable.

Further, among the cords described above, a cord of which elongation at break (EB25) of the purified polysaccharide fibers at 25°C, and an initial elastic modulus (IM25) at the time of elongation of 0.5 to 0.7% at 25°C satisfy the following Expression (3) is preferable.

$$\frac{Er}{EB^{-0.82}} \geq 10.5 \quad (3)$$

As described above, in a pneumatic radial tire for high-speed driving, a belt reinforcement layer is arranged outside a belt layer in a radial direction to cover at least both end portions of the belt layer. In the radial tire, by applying a load to the belt reinforcement layer at the time of high-speed driving, the organic fibers used in the belt reinforcement layer creep, and a part of a tread portion of the tire may be deformed (hereinafter, referred to as a flat spot). The flat spot easily occurs since load dependency of creep of the organic fibers used in the belt reinforcement layer at a high

temperature is high.

For this reason, in the purified polysaccharide fibers configuring the cord, it is preferable that a difference between a creep amount (%) at the time of applying a load of 4 cN/dtex at 80°C, and a creep amount at the time of applying a load of 2 cN/dtex at 80°C be less than or equal to 2.0 (%).

By using such a cord, it is possible to obtain a tire excellent in decreasing the flat spot.

By using the cord of the present invention excellent in tenacity and elongation at break for a carcass ply, a belt ply, or a belt protective layer, it is possible to obtain a high performance tire. Among them, it is preferable that the cord of the present invention be used for the carcass ply, and thus it is possible to obtain a tire having excellent pressure resistance or excellent side cut resistance.

In addition, it is preferable that the cord of the present invention be used for the belt ply, the belt protective layer, or both of them.

By using the cord of the present invention which is excellent in tenacity and elongation at break, and has a high initial elastic modulus and low temperature dependency of an elastic modulus for the carcass ply, the belt ply, or the belt protective layer, it is possible to confer excellent performance in terms of steering stability, ride quality, and durability to the tire.

In particular, by using the cord of the present invention using the purified polysaccharide fibers of which the tenacity retention rate (HT/TB) is 70 to 100 (%) for the carcass ply, it is possible to confer heat resistance to the carcass including one or more carcass plies. Accordingly, even when the tire temperature at the time of run-flat driving is a high temperature, the carcass using the cord of the present invention does not melt, and thus it is possible to suppress tire deformation.

As the cord of the present invention manufactured by the purified polysaccharide fibers, a single twist structure including one filament bundle which is twisted, and a plural twist structure in which two or more primarily twisted filament bundles are combined by being finally twisted are preferably adopted.

As described above, the twisted yarn tenacity utilization rate (CT/TB) at the time of setting the tenacity of the cord at 25°C to CT (cN/dtex) is greater than or equal to 70%. Thus, the purified polysaccharide fibers manufactured by using the ionic liquid have excellent twisting convergence compared to purified polysaccharide fibers manufactured by using NMMO of the related art, and thus have an excellent tenacity utilization rate at the time of manufacturing the cord. According to the present invention, by improving the tenacity utilization rate, it is possible to reduce the used amount of the purified polysaccharide fibers at the time of manufacturing the cord, and thus an environmental impact decreases. In addition, when the cord of the present invention is used for a tire, it is possible to reduce tire weight. Further, when the purified polysaccharide fibers having the same weight as that of the purified polysaccharide fibers manufactured by using a manufacturing method of the related art are used, it is possible to improve operational safety.

Fineness per one cord is preferably 1,000 to 10,000 dtex, and more preferably 1,400 to 6,000 dtex. When a cord less than 1,000 dtex is used, it is necessary to increase the number of carcasses in order to maintain tire strength, and thus tire manufacturing cost increases. When a cord greater than 10,000 dtex is used, a thickness of a carcass layer increases more than necessary, and thus the tire weight increases.

A twist coefficient Nt of the cord is preferably 0.20 to 1.00, and more preferably 0.40 to 1.00. When the twist coefficient Nt is greater than or equal to 0.20, the cord has excellent resistance to fatigue and excellent durability.

The twist coefficient Nt is obtained by the following expression.

$$Nt = \tan\theta = 0.001 \times N \times \sqrt{\frac{0.125 \times D}{\rho}} \quad \cdots (4)$$

D: total fineness of cord (dtex)
p: specific gravity of cord (g/cm$^3$)
N: number of twists (turns/10 cm)

The thread count of the carcass ply in the cord of the present invention is preferably 35 to 60 (number/50 mm). When the thread count is greater than or equal to 35 (number/50 mm), the cord has excellent durability without the carcass strength being insufficient.

Further, the cord of the present invention may be a hybrid cord obtained by twisting the raw yarn which is the purified polysaccharide fibers described above, and fibers of a material different from the purified polysaccharide fibers.

From a viewpoint of supplementing low thermal shrinkage stress in the purified polysaccharide fibers, the fibers of the different material are, preferably organic fibers of which the thermal shrinkage stress at 180°C is greater than or equal to 0.20 cN/dtex, more preferably nylon or polyketone, and especially preferably nylon. Furthermore, a manufacturing

method of the nylon used in the present invention follows a usual method.

The hybrid cord of the present invention is obtained by twisting the purified polysaccharide fibers and the fibers of the material different from the purified polysaccharide fibers, and thus has high thermal shrinkage stress. The hybrid cord of the present invention has high rigidity and excellent resistance to fatigue compared to a hybrid cord of the related art which is obtained by twisting Lyocell and nylon.

Further, in the tire using the hybrid cord of the present invention, a deflection due to high thermal shrinkage stress at the time of performing the run-flat driving can be suppressed even when a temperature of the side wall portion or the carcass is a high temperature.

By using the hybrid cord of the present invention for the carcass ply or the band ply, it is possible to obtain a high performance tire. From these, it is preferable that the hybrid cord of the present invention be used for the carcass ply.

In addition, the cord of the present invention may be used for at least one of the carcass ply and the band ply, and can be used for both of the carcass ply and the band ply.

As the hybrid cord of the present invention, a single twist structure including one filament bundle which is twisted, and a plural twist structure in which two or more primarily twisted filament bundles are combined by being finally twisted are preferably adopted.

Total fineness of the hybrid cord of the present invention (fineness per one cord) is preferably 1,000 to 10,000 dtex, more preferably 1,400 to 6,000 dtex, and especially preferably 1,400 to 4,000 dtex. When a cord of which the total fineness is less than 1,000 dtex is used, it is necessary to increase the number of carcasses in order to maintain the tire strength, and thus the tire manufacturing cost increases. When a cord of which the total fineness is greater than 10,000 dtex is used, the thickness of the carcass layer increases more than necessary, and thus the tire weight increases.

A twist coefficient Nt of the hybrid cord is preferably 0.20 to 1.00, and more preferably 0.40 to 0.70. When the twist coefficient Nt is greater than or equal to 0.20, the hybrid cord has excellent resistance to fatigue and excellent durability.

The thread count of the carcass ply in the hybrid cord of the present invention is preferably 35 to 60 (number/50 mm). When the thread count is greater than or equal to 35 (number/50 mm), the cord has excellent durability without the carcass strength being insufficient. When the thread count is greater than or equal to 60 (number/50 mm), peeling properties of rubber and the cord are degraded.

[Rubber-Cord Composite Structure]

The cord of the present invention is immersed in a general adhesive agent such as resorcin-formalin-latex (RFL), is subjected to a dip treatment, and is subjected to a heat treatment including a drying process and a baking process. A dip cord manufactured thereby is topped with coating rubber, and thus a rubber-cord composite structure is manufactured. That is, the rubber-cord composite structure of the present invention is obtained by compositing the cord of the present invention, and a rubber material.

Furthermore, in the present invention, the cord of the rubber-cord composite structure can be substituted with the purified polysaccharide fibers. That is, this is a rubber-fiber composite structure, and is obtained by compositing the purified polysaccharide fibers described above, and the rubber material.

The rubber of the rubber-cord composite structure of the present invention, for example, is obtained from natural rubber (NR), synthetic rubber having a carbon-carbon double bond, or a rubber composition in which at least two of natural rubber and synthetic rubber are blended.

As a synthetic rubber, for example, polyisoprene rubber (IR) which is a homopolymer of a conjugated diene compound such as isoprene, butadiene, and chloroprene, polybutadiene rubber (BR), polychloroprene rubber, and the like; styrene butadiene copolymerization rubber (SBR) which is a copolymer of a conjugated diene compound with a vinyl compound such as styrene, acrylonitrile, vinylpyridine, acrylic acid, methacrylic acid, alkyl acrylates, and alkyl methacrylates, vinylpyridine butadiene styrene copolymer rubber, acrylonitrile butadiene copolymer rubber, acrylic butadiene copolymer rubber, methacrylic butadiene copolymer rubber, methyl acrylate butadiene copolymer rubber, methyl methacrylate butadiene copolymer rubber, and the like; a copolymer (for example, isobutylene isoprene copolymer rubber (IIR)) of olefins such as ethylene, propylene, and isobutylene with a diene compound; a copolymer (EPDM) (for example, an ethylene-propylene-cyclopentadiene ternary copolymer, an ethylene-propylene-5-ethylidene-2-norbornene ternary copolymer, and an ethylene-propylene-1,4-hexadiene ternary copolymer) of olefins with an unconjugated diene; in addition, various halogenated rubbers, for example, chlorinated isobutylene isoprene copolymer rubber (Cl-IIR), brominated isobutylene isoprene copolymer rubber (Br-IIR), and the like; and a ring-opened polymer of norbornene are included.

A polyalkenamer (for example, a polypentenamer) obtained by performing ring-opened polymerization with respect to a cycloolefin and a synthetic rubber described above, rubber (for example, polyepichlorohydrin rubber which can be vulcanized with sulfur) obtained by ring-opened polymerization of an oxirane ring, and a saturated elastic body such as polypropylene oxide rubber can be blended.

In the rubber composition used in the present invention, sulfur, an organic sulfur compound, and other cross-linking agents at, preferably 0.01 to 10 parts by mass, and more preferably 1 to 5 parts by mass may be blended into the rubber composition of 100 parts by mass, in addition, a vulcanization accelerator of, preferably 0.01 to 10 parts by mass, and more preferably 0.5 to 5 parts by mass may be blended into the rubber composition of 100 parts by mass. In this case, a type of vulcanization accelerator is not limited, and it is possible to reduce a vulcanization time by using dibenzothiazyl sulfide (DM), diphenylguanidine (D), and the like.

In addition, into the rubber composition used in the present invention, for example, an oil such as mineral oil such as paraffin-based process oil, naphthene-based process oil, or aromatic process oil, a cooligomer of ethylene-$\alpha$-oletin, paraffin wax, and liquid paraffin; and a vegetable oil such as castor oil, cotton seed oil, linseed oil, rapeseed oil, soybean oil, palm oil, coconut oil, and peanut oil may be blended.

Further, in the rubber composition used in the present invention, a filler such as Carbon Black, silica, calcium carbonate, calcium sulfate, clay, and mica; a vulcanization accelerator aid such as zinc oxide, and stearic acid; and a compounding agent used in an ordinary rubber industrial such as an antioxidant may be added by an ordinary method according to a purpose, a usage, and the like.

Furthermore, when the cord is the hybrid cord described above, it is preferable that the thermal shrinkage stress (cN/dtex) of the hybrid cord at 180°C at the time of extracting the hybrid cord of the present invention from the vulcanized rubber-cord composite structure be greater than or equal to 0.10 cN/dtex.

By setting the thermal shrinkage stress to be greater than or equal to 0.10 cN/dtex, the tire using the rubber-cord composite structure of the present invention has excellent run-flat durability.

It is preferable that the carcass ply be manufactured by using the rubber-cord composite structure of the present invention, and it is possible to manufacture a tire having excellent tire properties by using the rubber-cord composite structure described above through ordinary casting, and a vulcanization process.

Further, it is preferable that the belt reinforcement layer be manufactured by using the rubber-cord composite structure of the present invention, and it is possible to manufacture a tire having excellent tire properties through ordinary casting, and a vulcanization process.

[Tire]

A first embodiment of the tire of the present invention will be described with reference to FIG. 1.

As illustrated in FIG. 1, a tire 1 of this embodiment includes a pair of right and left bead portions 2, a pair of right and left side wall portions 3 extending in a tire radial direction outside from the bead portion 2, and a tread portion 4 connected to the pair of right and left side wall portions 3.

Further, the tire 1 of this embodiment includes a carcass 5 of at least one layer extending in a toroidal shape over the pair of right and left bead portions 2 and 2.

In the tire 1 of this embodiment, a rubber-cord composite structure 21 of the present invention is used for the carcass 5. As described above, a cord of the present invention satisfies the expression (1) and the expression (2) described above, and a twisted yarn tenacity utilization rate (CT/TB) is greater than or equal to 70%, and thus the cord of the present invention has excellent tenacity.

Thus, the carcass 5 using the rubber-cord composite structure has excellent strength, achieves a function as a skeleton material, and confers pressure resistance and resistance to external damage to the tire.

Accordingly, the tire 1 of this embodiment has excellent durability and excellent resistance to external damage.

Next, a second embodiment will be described with reference to FIG. 2. Furthermore, the same reference numerals are applied to the same members as in the tire of the first embodiment described above, and the detailed description will be omitted.

As illustrated in FIG. 2, in a tire 1 of this embodiment, a reinforcement rubber layer 10 formed of hard rubber having a crescent-like cross-section is arranged in an inner surface side of a carcass 5 and a portion over a range of a side wall portion 3. That is, the tire 1 of this embodiment is a so-called side reinforcement type tire in which the side wall portion 3 is reinforced by the reinforcement rubber layer 10.

In the tire 1 of this embodiment, a rubber-cord composite structure 21 of the present invention is used for the carcass 5. When the tire 1 is punctured, and a pressure in the tire decreases, the tire is deformed to become flat, but the reinforcement rubber layer 10 suppresses the deformation. At this time, a load due to a vehicle body weight or the like is repeatedly applied to the reinforcement rubber layer 10, and heat is generated by the deformation of the tire itself.

When the cord of the rubber-cord composite structure is a hybrid cord obtained by twisting purified polysaccharide fibers, and fibers of a material different from the purified polysaccharide fibers, the hybrid cord has the properties described above, and thus the carcass 5 using the rubber-cord composite structure achieves a function as a skeleton material, and the tire deformation is suppressed at a high temperature.

For example, the hybrid cord of the present invention has thermal shrinkage properties, and thus shrinks at the time of run-flat driving (under a high temperature), and it is possible to increase rigidity and to suppress a deflection of

the side wall portion 3. In addition, the hybrid cord of the present invention elongates to decrease the rigidity and a vertical spring of the tire 1 at the time of ordinary driving (under a low temperature), and thus has excellent steering stability.

Further, even when a tire temperature is a high temperature at the time of run-flat driving, the carcass 5 using the rubber-cord composite structure of the present invention is different from a case where only nylon is used, and thus does not easily melts.

Next, a third embodiment will be described with reference to FIG. 3. Furthermore, the same reference numerals are applied to the same members as in the tire of the first embodiment described above, and the detailed description will be omitted.

A tire of this embodiment uses the rubber-cord composite structure described above. It is preferable that the tire be a tire for a motorcycle.

As illustrated in FIG. 3, a tire 1 of this embodiment includes a pair of right and left bead portions 2, and a carcass 5 extending in a toroidal shape from the bead portion 2.

In this embodiment, the carcass 5 is configured of one carcass ply, and has a rubber-cord composite structure 21 of the present invention.

In addition, the tire 1 of this embodiment includes a circumferential spiral belt layer 20 outside a crown portion 14C of the carcass 5 in the tire radial direction. The circumferential spiral belt layer 20 includes a rubber-cord composite structure 21 of the present invention of at least one layer in which cords are arranged in parallel to extend in a spiral shape in a tire circumferential direction. In this embodiment, the spiral belt layer 20 is configured by being divided into three parts of a center side spiral belt layer 20C over a tire equatorial plane CL, and a pair of shoulder side slide belt layers 20L and 20R arranged on a tread shoulder portion TS side on both sides in a tire width direction.

Further, the tire 1 of this embodiment includes a crossing belt layer 24 formed of double-layered crossing belt layers 25A and 25B outside the circumferential spiral belt layer 20 in the tire radial direction. The crossing belt layers 25A and 25B are formed of the rubber-cord composite structure 21 of the present invention in which cords are arranged in parallel to extend at an angle to the tire equatorial plane CL. A tread portion 4 is disposed outside the crossing belt layer 24 in the tire radial direction.

In this embodiment, the crossing belt layer 24 is widely arranged with respect to an entire width of the tread portion 4. By the arrangement, the crossing belt layer 24 is disposed in the tread portion 4 in which the circumferential spiral belt layer 20 is not disposed, and even when a vehicle leans greatly (at the time of turning), sufficient in-plane shearing rigidity is secured, and thus steering stability increases. Here, the entire width of the tread portion 4 is a width of the tread portion 4 in a peripheral direction, and the width of the tread portion 4 in the peripheral direction indicates a width along a circumference of the tread portion 4 in an approximately circular arc direction.

In the tire 1 of this embodiment, the rubber-cord composite structure 21 of the present invention is used for the carcass 5, the circumferential spiral belt layer 20, and the crossing belt layer 24.

The rubber-cord composite structure of the present invention has the properties described above, and thus the carcass 5, the circumferential spiral belt layer 20, and the crossing belt layer 24 using the rubber-cord composite structure 21 achieve a function as a skeleton material, and are able to confer excellent performance in terms of steering stability, ride quality, and durability to the tire.

Furthermore, in this embodiment, the rubber-cord composite structure of the present invention is used for both of the carcass and the belt layer, and the rubber-cord composite structure of the present invention may be used for any one of the carcass and the belt layer.

In addition, a belt layer may be formed of any one of the circumferential spiral belt layer and the crossing belt layer.

Next, a fourth embodiment will be described with reference to FIG. 4.

An embodiment of the tire of the present invention will be described with reference to FIG. 4. As illustrated in FIG. 4, a tire 1 of this embodiment includes a pair of right and left bead portions 2, a side wall portion 3, a carcass 5 extending in a toroidal shape over the pair of right and left bead portions 2 and 2, a belt layer 13 arranged outside the carcass 5 in a crown portion radial direction, a belt reinforcement layer 34 arranged outside a belt layer 13 in an approximately tire equatorial direction, and a tread portion 4 arranged outside a belt reinforcement layer 34.

The belt reinforcement layer 34 has the rubber-cord composite structure of the present invention in which a plurality of fiber cords 6 are arranged in parallel, and is arranged in at least both end portions of the belt layer 3 and an entire surface of the belt layer 3 in an equatorial direction of a tire cross-section to be wound at substantially 0° with respect to the tire circumferential direction.

In this embodiment, the belt layer 13 includes a first belt portion 13 a and a second belt portion 13b which are overlapped. Then, the carcass 5 includes a first carcass portion 5a and a second carcass portion 5b which are overlapped.

In the tire 1 of this embodiment, the rubber-cord composite structure 21 of the present invention is used for the belt reinforcement layer 34. The rubber-cord composite structure of the present invention has the properties described above, and thus the belt reinforcement layer 34 using the rubber-cord composite structure is able to confer excellent performance in terms of improving high-speed durability to the tire.

Examples

Next, the present invention will be described in more detail by illustrating examples, but the present invention is not limited to the following examples.

Examples 1 to 6 and Comparative Example 1 to 4

[Manufacture of Multifilament]

Dissolved cellulose solution in which pulp was dissolved in 1-ethyl-3-methyl imidazolium acetate (C2AmimAc), 1-ethyl-3-methyl imidazolium diethyl phosphate (C2mimDEP), or N-methyl morpholine-N-oxide (NMMO) was filtered and degassed. Subsequently, the dissolved cellulose solution was extruded by an extruder in a coagulating bath (in a solidifying tank) after being heated to a spinning temperature, and thus a multifilament (purified cellulose fibers) used in Examples 1 to 6 and Comparative Examples 1 to 4 was obtained through a cleaning process and a drying process (refer to Table 1).

Properties of the multifilament used in each Example and each Comparative Example were measured by the following test methods, and results thereof are shown in Table 1.

(1) Raw Yarn Fineness

100 m of multifilament was sampled, was dried at 130°C for 30 minutes, then was cooled to room temperature in a drying desiccator, and then the weight was determined. 1 g per 10,000 m was set to 1 dtex, and thus fineness was calculated from a weight of 100 m.

(2) Tenacity and Elongation at Break (TB and EB) of Raw Yarn

Fibers obtained by performing false twisting 4 times per 10 cm of the multifilament were subjected to a tensile test by using a tensile tester. Tenacity was obtained by dividing breaking tenacity by the fineness, and was measured at room temperature (25°C). Elongation at break was a degree of elongation at the time of being broken.

[Manufacturing of Cord]

The obtained multifilament was primarily twisted, and was finally twisted by combining two primarily twisted multifilaments, and then a cord of each Example and each Comparative Example was manufactured. The number of final twists and the number of primary twists are shown in Table 1.

Properties of the cord of each Example and each Comparative Example were measured by the following test methods, and results thereof are shown in Table 1.

(1) Cord Fineness

100 m of cord of each Example and each Comparative Example was sampled, was dried at 130°C for 30 minutes, then was cooled to room temperature in a drying desiccator, and then the weight was determined. 1 g per 10,000 m was set to 1 dtex, and thus fineness was calculated from a weight of 100 m.

(2) Cord Tenacity (CT)

The cord of each Example and each Comparative Example was subjected to a tensile test by using a tensile tester. Tenacity was obtained by dividing breaking tenacity by the fineness, and was measured at room temperature (25°C).

(3) Twisted Yarn Tenacity Utilization Rate (CT/TB)

A ratio (%) of cord tenacity CT at 25°C to tenacity TB of tenacious raw yarn of raw yarn at 25°C was obtained.

It was confirmed that the cords of Examples 1 to 6 formed by twisting purified polysaccharide fibers obtained by using ionic liquid had excellent tenacity compared to the cords of Comparative Examples 1 to 2 formed by twisting purified polysaccharide fibers obtained by using NMMO.

[Manufacturing of Dip Cord]

The cord of each Example and each Comparative Example was immersed in a resorcin-formalin-latex (RFL) adhesive agent, was subjected to a dip treatment, and then was subjected to a heat treatment including a drying process and a baking process. The drying process was performed at 150°C for 150 seconds with a tensile force of $1\times10^{-3}$ N/dtex. The baking process was performed at the same temperature for the same time with the same tensile force as that of the drying process after the drying process was performed, and a dip cord was prepared.

[Manufacturing of Carcass Ply]

The dip cord was calendered with coating rubber, and a carcass ply was prepared.
Properties of the cord manufactured by using the cord of each Example and each Comparative Example were measured by the following test method, and results thereof are shown in Table 1.

(1) Carcass Strength (N/mm)

Carcass strength was calculated by multiplying the cord tenacity by the thread count.
As shown in Table 1, the strength of the carcass using the cords of Examples 1 to 6 which satisfied the expression (1) and the expression (2) and had a twisted yarn tenacity utilization rate (CT/TB) greater than or equal to 70% was increased to be greater than or equal to 6500 N/50 mm.
On the other hand, the strength of the carcass using the cord of Comparative Examples 1 to 2 which did not satisfy the expression (1), and had a twisted yarn tenacity utilization rate (CT/TB) less than 70% was decreased compared to Examples.
Further, the purified polysaccharide fibers used for the cords of Examples 4 to 6 had the tenacity TB of the raw yarn at 25°C which was greater than or equal to 5.4 cN/dtex, and the elongation at break EB (%) of the raw yarn at 25°C which was greater than or equal to 8.8%. For this reason, the strength of the carcass using the cords of Examples 4 to 6 was further increased to be greater than or equal to 7700 N/50 mm.

[Manufacturing of Tire]

By using the carcass ply, a tire of 195/65R15 was prepared through ordinary casting, and a vulcanization process.
Tire properties of each Example and each Comparative Example were measured by the following test method, and results thereof are shown in Table 1.

(1) Tire Inner Pressure Filling Safety Factor (Index)

The tire of each Example and each Comparative Example was subjected to rim assembling, water was filled into the tire, and a fracture water pressure thereof was measured. The fracture water pressure of the tire of Comparative Example 2 was set to 100 and displayed in index. As the index increased, the fracture water pressure increased, and thus pressure resistance became excellent.
As shown in Table 1, the inner pressure filling safety factor of the tire using the cords of Examples 1 to 6 which satisfied the expression (1) and the expression (2), and had a twisted yarn tenacity utilization rate (CT/TB) greater than or equal to 70% was increased compared to the inner pressure filling safety factor of the tire using the cords of Comparative Examples 1 to 2 which did not satisfy the expression (1), and had a twisted yarn tenacity utilization rate (CT/TB) less than or equal to 70%.
Further, as described above, the purified polysaccharide fibers used for the cords of Examples 4 to 6 had the tenacity TB of the raw yarn at 25°C which was greater than or equal to 5.4 cN/dtex, and the elongation at break EB (%) of the raw yarn at 25°C which was greater than or equal to 8.8%. For this reason, the inner pressure filling safety factor of the tire using the cords of Examples 4 to 6 was further increased.
In addition, in Comparative Examples 3 and 4 which did not satisfy the expression (2), a lot of thread breakages were generated at the time of producing the fibers, and productivity deceased greatly, and thus it was not possible to manufacture a cord material of a required amount for manufacturing a tire.

[Table 1]

| | Comparative Example 1 | Comparative Example 2 | Example 1 | Example 2 | Example 3 |
|---|---|---|---|---|---|
| Material | Purified Cellulose | Purified Cellulose | Purified Cellulose | Purified Cellulose | Purified Cellulose |
| Solvent | NMMO | NMMO | C2mimDEP | C2mimAc | C2mimDEP |
| Solidifying Liquid | Water | Water | Water | Water | Water |
| Tenacity TB of Raw Yarn at Room Temperature (cN/dtex) | 4.63 | 4.63 | 4.97 | 4.42 | 3.99 |
| Elongation at Break EB of Raw Yarn at Room Temperature (%) | 6.1 | 6.1 | 7.04 | 9.12 | 10.87 |
| Expression (1) | 11.9 | 11.9 | 13.7 | 14.0 | 13.8 |
| Expression (2) | 28.2 | 28.2 | 35.0 | 40.3 | 43.4 |
| Fineness of Raw Yarn (dtex) | 1791 | 1807 | 1815 | 1848 | 1874 |
| Structure of Cord | 1840 dtex/2 | 1840 dtex/2 | 1840 dtex/2 | 1840 dtex/2 | 1840 dtex/2 |
| Fineness of Cord (dtex) | 3583 | 3614 | 3630 | 3696 | 3748 |
| Specific Gravity of Cord (g/cm3) | 1.52 | 1.52 | 1.52 | 1.52 | 1.52 |
| Number of Primary Twists (turns/10 cm) | 55 | 50 | 55 | 50 | 50 |
| Number of Final Twists (turns/10 cm) | 55 | 50 | 55 | 50 | 50 |
| Twist Coefficient Nt | 0.94 | 0.86 | 0.95 | 0.87 | 0.88 |
| Cord Tenacity (cN/dtex) | 2.96 | 3.19 | 3.62 | 3.40 | 3.27 |
| Twisted Yarn Tenacity Utilization Rate CT/TB (%) | 64 | 69 | 73 | 77 | 82 |
| Driving Number (number/50 mm) | 55 | 55 | 55 | 55 | 55 |
| Strength of Carcass (N/50 mm) | 5839 | 6350 | 7226 | 6918 | 6745 |
| Tire Inner Pressure Filling Safety Factor (INDEX) | 90 | 100 | 115 | 110 | 105 |
| Note | - | - | - | - | - |

| | Example 4 | Example 5 | Example 6 | Comparative Example 3 | Comparative Example 4 |
|---|---|---|---|---|---|
| Material | Purified Cellulose | Purified Cellulose | Purified Cellulose | Purified Cellulose | Purified Cellulose |
| Solvent | C2mimAc | C2mimDEP | C2mimDEP | C2mimDEP | C2mimAC |
| Solidifying Liquid | Water | Water | Water | Water | Water |
| Tenacity TB of Raw Yarn at Room Temperature (cN/dtex) | 5.61 | 6.29 | 6.29 | 6.74 | 4.93 |
| Elongation at Break EB of Raw Yarn at Room Temperature (%) | 11.68 | 11.92 | 11.92 | 12.5 | 21.2 |
| Expression (1) | 20.1 | 22.8 | 22.8 | 25.1 | 24.1 |
| Expression (2) | 65.5 | 75.0 | 75.0 | 84.3 | 104.5 |
| Fineness of Raw Yarn (dtex) | 1832 | 1884 | 1231 | 1856 | 1817 |
| Structure of Cord | 1840 dtex/2 | 1840 dtex/2 | 1200 dtex/3 | 1840 dtex/2 | 1840 dtex/2 |
| Fineness of Cord (dtex) | 3664 | 3769 | 3693 | 3712 | 3635 |
| Specific Gravity of Cord (g/cm3) | 1.52 | 1.52 | 1.52 | 1.52 | 1.52 |
| Number of Primary Twists (turns/10 cm) | 50 | 50 | 40 | 50 | 50 |
| Number of Final Twists (turns/10 cm) | 50 | 50 | 40 | 50 | 50 |
| Twist Coefficient Nt | 0.87 | 0.88 | 0.84 | 0.87 | 0.86 |
| Cord Tenacity (cN/dtex) | 4.43 | 5.09 | 5.03 | 5.26 | 4.09 |
| Twisted Yarn Tenacity Utilization Rate CT/TB (%) | 79 | 81 | 80 | 78 | 83 |
| Driving Number (number/50 mm) | 55 | 55 | 55 | - | - |
| Strength of Carcass (N/50 mm) | 8932 | 10560 | 10221 | - | - |
| Tire Inner Pressure Filling Safety Factor (INDEX) | 140 | 160 | 160 | - | - |
| Note | - | - | - | The amount of fiber required to manufacture a tire could not be obtained. | |

From the results described above, since it is clear that the cords of Examples 1 to 6 have high carcass strength, the tire of the present invention using these cords has excellent durability. In addition, it is clear that the tires of Examples 1 to 6 have a high inner pressure filling safety factor, and thus have excellent resistance to external damage such as a side cut.

Examples 7 to 12 and Comparative Examples 5 to 7

[Manufacturing of Multifilament A]

Dissolved cellulose solution in which pulp was dissolved in 1-ethyl-3-methyl imidazolium diethyl phosphate (C2mimDEP) or N-methyl morpholine-N-oxide (NMMO) was filtered and degassed. Subsequently, the dissolved cellulose solution was extruded by an extruder in a coagulating bath (in a water bath) after being heated to a spinning temperature, and thus a multifilament A (purified cellulose fibers) used in Examples 7 to 12 and Comparative Examples 5 to 7 was obtained through a cleaning process and a drying process (refer to Table 2).

[Manufacturing of Multifilament B]

A multifilament B (nylon) used in Examples 7 to 12, and Comparative Example 6 was obtained through a melt spinning process (refer to Table 2).

Properties of the multifilament used in each Example and each Comparative Example were measured by the following test methods, and results thereof are shown in Table 2.

(1) Raw Yarn Fineness (Cord Structure)

100 m of the obtained multifilament was sampled, was dried at 130°C for 30 minutes, and then was cooled to room temperature in a drying desiccator, and then the weight was determined. 1 g per 10,000 m was set to 1 dtex, and thus fineness was calculated from a weight of 100 m.

(2) Measuring Method of Initial Elastic Modulus and Elongation at Break

Fibers obtained by performing false twisting 4 times per 10 cm of the multifilament were subjected to a tensile test at room temperature (25°C) by using a tensile tester. Elongation at break was a degree of elongation at the time of being broken, and an initial elastic modulus [cN/dtex·%] was obtained from a gradient of a tangential line of a stress-strain curve when the elongation at room temperature (25°C) was 0.6 to 0.9%.

(3) Thermal Shrinkage Stress

Fibers obtained by performing false twisting 4 times per 10 cm of the cord material B were heated to 180°C, and were cooled to room temperature, and were heated to 180°C again. Stress of the fibers (cN/dtex) was measured.

In addition, thermal shrinkage stress of the multifilament which was raw yarn taken out from a product tire was similarly measured.

[Manufacturing of Cord]

The obtained multifilament (a raw material) was primarily twisted, and was finally twisted by combining two primarily twisted multifilaments, and then a cord of each Example and each Comparative Example was manufactured. The number of final twists and the number of primary twists are shown in Table 2.

[Manufacturing of Dip Cord]

The cord of each Example and each Comparative Example was immersed in a resorcin-formalin-latex (RFL) adhesive agent, was subjected to a dip treatment, and then was subjected to a heat treatment including a drying process and a baking process. The drying process was performed at 150°C for 150 seconds with a tensile force of $1\times10^{-3}$ N/dtex. The baking process was performed at the same temperature for the same time with the same tensile force as that of the drying process after the drying process was performed, and a dip cord was manufactured. A dip cord was manufactured by using the cord of each Example and each Comparative Example.

[Manufacturing of Carcass Ply]

The dip cord was calendered with coating rubber, and a carcass ply was prepared.

[Manufacturing of Tire]

By using the carcass ply, a tire of 305/35R19 was prepared through ordinary casting, and a vulcanization process.

Tire properties of each Example and each Comparative Example were measured by the following test method, and results thereof are shown in Table 2.

(1) Run-Flat Driving Distance (Index)

A run-flat tire of each Example and each Comparative Example was subjected to rim assembling, was enclosed with an internal pressure of 230 kPa, and was left in a room at 38°C for 24 hours. Then, a core of a valve was removed, and the internal pressure was set to an atmospheric pressure, and then a drum driving test was performed under conditions of a load of 4.17 kN, a velocity of 90 km/hr, and a temperature of 40°C. A distance travelled until occurrence of failure of each run-flat tire was measured, and the driving distance up to the failure occurrence of the run-flat tire of Comparative Example 1 was set to 100 and displayed in index. As the index increased, the distance travelled until occurrence of failure increased, and thus run-flat durability became excellent.

(2) State of Cord after Performing Run-Flat Driving

A state of the dip cord after measuring (1) run-flat driving distance was visually confirmed.

(3) Steering Stability

The run-flat tire of each Example and each Comparative Example was mounted on a passenger vehicle, a real vehicle feeling test was performed at a velocity of 60 to 200 km/hr, marks of 1 to 10 were applied to items such as (i) straight advance stability, (ii) turning stability, (iii) rigidity feeling, and (iv) handling, and the marks of the respective items were averaged, and thus steering stability was evaluated.

Furthermore, the evaluation was performed by two expert drivers, an average of marks of the two drivers was obtained, and a control tire of Comparative Example 5 was indexed as 100. As the index increased, the steering stability became better.

(4) Thermal Shrinkage Stress of Product Tire at 180°C

The cord taken out from the product tire was heated to 180°C, and was cooled to room temperature, and was heated to 180°C again. Stress of the cord (cN/dtex) was measured.

As shown in Table 2, in Examples 7 to 10, the steering stability and the run-flat durability were excellent, and a meltdown was not observed in the cord after performing the run-flat driving.

In contrast, in Comparative Example 5, a value of the expression (1) was less than 10.5, and thus the steering stability was degraded.

Further, in Comparative Example 5, the cord material B was not used, and thus the thermal shrinkage stress and the run-flat durability of the product tire at 180°C were degraded compared to Examples.

In addition, in Comparative Example 6 in which the cord material A was not used, a meltdown was observed in the cord after performing the run-flat driving, and the steering stability was degraded.

In addition, in Comparative Example 7 in which the cord material B was not used, the thermal shrinkage stress and the run-flat durability of the product tire at 180°C were degraded compared to Examples.

In Examples 11 and 12, the steering stability was excellent, but the thermal shrinkage stress of the cord taken out from the product tire was less than 0.1 cN/dtex, and thus the run-flat durability was degraded compared to other Examples.

[Table 2]

| | Comparative Example 5 | Comparative Example 6 | Comparative Example 7 | Example 7 | Example 8 |
|---|---|---|---|---|---|
| Structure of Cord (A+B) | 1840 dtex/2 | 1400 dtex/2 | 1840 dtex/2 | 1840 dtex/2 + 1400 dtex/1 | 1840 dtex/2 + 2100 dtex/1 |
| Multifilament A | Purified Cellulose | - | Purified Cellulose | Purified Cellulose | Purified Cellulose |
| Solvent of Multifilament A | NMMO | - | C2mimDEP | C2mimDEP | C2mimDEP |
| Congealing Liquid of Multifilament A | Water | | Water | Water | Water |
| Elongation at Break EB (%) of Multifilament A | 5.5 | - | 11.92 | 11.92 | 11.92 |
| Initial Elastic Modulus Er of Multifilament A (cN/dtex·%) | 2.21 | - | 2.74 | 2.74 | 2.74 |
| $EB^{-0.82}$ | 0.25 | - | 0.13 | 0.13 | 0.13 |
| $Er/EB^{-0.82}$ | 8.94 | - | 20.91 | 20.91 | 20.91 |
| Number of Primary Twists of Multifilament A (turns/10 cm) | 40 | - | 40 | 40 | 40 |
| Multifilament B | - | Nylon | - | Nylon | Nylon |
| Number of Primary Twists of Multifilament B (turns/10 cm) | - | 40 | - | 15 | 15 |
| Thermal Shrinkage Stress of Multifilament B | - | 0.34 | - | 0.34 | 0.34 |
| Number of Final Twists (turns/10 cm) | 40 | 40 | 50 | 40 | 40 |
| Thermal Shrinkage Stress of Product Tire at 180°C (cN/dtex) | 0 | 0.27 | 0 | 0.15 | 0.18 |
| Steering Stability (INDEX) | 100 | 85 | 125 | 110 | 110 |
| Run-Flat Driving Distance (INDEX) | 100 | 134 | 100 | 114 | 122 |
| State of Cord after Performing Run-Flat Driving | No Meltdown | Meltdown | No Meltdown | No Meltdown | No Meltdown |

| | Example 11 | Example 9 | Example 10 | Example 12 |
|---|---|---|---|---|
| Structure of Cord (A+B) | 1840 dtex/2 + 940 dtex/1 | 2450 dtex/1 + 1400 dtex/1 | 2450 dtex/1 + 2100 dtex/1 | 2540 dtex/1 + 940 dtex/1 |
| Multifilament A | Purified Cellulose | Purified Cellulose | Purified Cellulose | Purified Cellulose |
| Solvent of Multifilament A | C2mimDEP | C2mimDEP | C2mimDEP | C2mimDEP |
| Congealing Liquid of Multifilament A | Water | Water | Water | Water |
| Elongation at Break EB (%) of Multifilament A | 11.92 | 11.92 | 11.92 | 11.92 |
| Initial Elastic Modulus Er of Multifilament A (cN/dtex·%) | 2.74 | 2.74 | 2.74 | 2.74 |
| $EB^{-0.82}$ | 0.13 | 0.13 | 0.13 | 0.13 |
| $Er/EB^{-0.82}$ | 20.91 | 20.91 | 20.91 | 20.91 |
| Number of Primary Twists of Multifilament A (turns/10 cm) | 40 | 40 | 40 | 40 |
| Multifilament B | Nylon | Nylon | Nylon | Nylon |
| Number of Primary Twists of Multifilament B (turns/10 cm) | 15 | 15 | 15 | 15 |
| Thermal Shrinkage Stress of Multifilament B | 0.34 | 0.34 | 0.34 | 0.34 |
| Number of Final Twists (turns/10 cm) | 40 | 40 | 40 | 40 |
| Thermal Shrinkage Stress of Product Tire at 180°C (cN/dtex) | 0.08 | 0.14 | 0.17 | 0.05 |
| Steering Stability (INDEX) | 110 | 115 | 115 | 105 |
| Run-Flat Driving Distance (INDEX) | 99 | 118 | 120 | 99 |
| State of Cord after Performing Run-Flat Driving | No Meltdown | No Meltdown | No Meltdown | No Meltdown |

From the results described above, it is clear that since a hybrid cord obtained in Examples 7 to 12 is formed by twisting the purified polysaccharide fibers of which a relationship between the elongation at break and the initial elastic modulus satisfies the expression (3), fibers of a material different from the purified polysaccharide fibers, and thus the tire of the present invention using the hybrid cord has excellent steering stability and excellent run-flat durability.

Examples 13 to 17 and Comparative Examples 8 to 13

[Manufacturing of Multifilament (Raw Yarn)]

Dissolved cellulose solution in which pulp was dissolved in 1-ethyl-3-methyl imidazolium acetate (C2AmimAc), 1-ethyl-3-methyl imidazolium diethyl phosphate (C2mimDEP), or N-methyl morpholine-N-oxide (NMMO) was filtered and degassed. Subsequently, the dissolved cellulose solution was extruded by an extruder in a coagulating bath (in a water bath) after being heated to a spinning temperature, and thus multifilaments (purified cellulose fibers) of Examples 13 to 17 and Comparative Examples 8 to 13 shown in Table 3 were obtained through a cleaning process and a drying process.
Properties of the multifilament used in each Example and each Comparative Example were measured by the following test methods, and results thereof are shown in Table 3.

(1) Raw Yarn Fineness

100 m of multifilament was sampled, was dried at 130°C for 30 minutes, and then was cooled to room temperature in a drying desiccator, and then the weight was determined. 1 g per 10,000 m was set to 1 dtex, and thus fineness was calculated from a weight of 100 m.

(2) Tenacity and Elongation at Break of Raw Yarn

Fibers obtained by performing false twisting 4 times per 10 cm of the multifilament were subjected to a tensile test by using a tensile tester. Tenacity was obtained by dividing breaking tenacity by the fineness, and was measured at room temperature (25°C) and at a high temperature (150°C). Elongation at break was a degree of elongation at the time of being broken.

[Manufacturing of Cord]

The obtained multifilament (raw yarn) was primarily twisted, and was finally twisted by combining two primarily twisted multifilaments, and then a cord was manufactured. The number of primary twists and the number of final twists are shown in Table 3.

[Manufacturing of Dip Cord]

The cord was immersed in a resorcin-formalin-latex (RFL) adhesive agent, was subjected to a dip treatment, and then was subjected to a heat treatment including a drying process and a baking process. The drying process was performed at 150°C for 150 seconds with tensile force of $1 \times 10^{-3}$ N/dtex. The baking process was performed at the same temperature for the same time with the same tensile force as that of the drying process after the drying process was performed, and a dip cord was prepared.

[Preparation of Carcass Ply Material]

The dip cord was calendered with coating rubber, and a carcass ply material was prepared.

[Manufacturing of Run-Flat Tire]

By using the carcass ply material, a run-flat tire of 265/45R18 was prepared through ordinary casting, and a vulcanization process.
Run-flat tire properties of each Example and each Comparative Example were measured by the following test method, and results thereof are shown in Table 3.

(1) Run-Flat Driving Distance (Index)

The run-flat tire of each Example and each Comparative Example was subjected to rim assembling, was enclosed with an internal pressure of 230 kPa, and was left in a room at 38°C for 24 hours. Then, a core of a valve was removed, and the internal pressure was set to an atmospheric pressure, and then a drum driving test was performed under conditions of a load of 4.17 kN, a velocity of 90 km/hr, and a temperature of 40°C. A distance travelled until occurrence of failure of each run-flat tire was measured, and the driving distance up to the failure occurrence of the run-flat tire of Comparative Example 8 was set to 100 and displayed in index. As the index increased, the driving distance up to the failure occurrence increased, and thus run-flat durability became excellent.

(2) State of Cord after Performing Run-Flat Driving

A state of the dip cord after measuring (1) run-flat driving distance was visually confirmed.
As shown in Table 3, in Examples 13 to 17, the run-flat durability was excellent, and a meltdown was not observed in the cord after performing the run-flat driving.
In contrast, in Comparative Examples 8 and 9, a tenacity retention rate or the expression (1) was not satisfied, and thus the run-flat durability was degraded.
In addition, in Comparative Examples 10 and 11, the tenacity retention rate and the expression (2) were not satisfied, and thus the run-flat durability was degraded, and a meltdown was observed in the cord after performing the run-flat driving.
In addition, in Comparative Examples 12 and 13 in which the purified cellulose fibers were used, the expression (2) was not satisfied, and thus a lot of thread breakages were generated at the time of producing the fibers, and productivity decreased greatly, and thus it was not possible to manufacture a cord material of a required amount for manufacturing a tire.
Further, in Examples 14 to 17 in which tenacity TB of the raw yarn was greater than or equal to 3.8 cN/dtex, it was confirmed that exposure of the cord after performing the run-flat driving was reduced, and it was difficult for fluff or the like to occur compared to Example 13 in which the tenacity TB of the raw yarn was less than 3.8 cN/dtex.

[Table 3]

| | Example 13 | Example 14 | Example 15 | Example 16 | Example 17 |
|---|---|---|---|---|---|
| Material | Purified Cellulose | Purified Cellulose | Purified Cellulose | Purified Cellulose | Purified Cellulose |
| Solvent | C2mimAc | C2mimDEP | C2mimAc | C2mimDEP | C2mimDEP |
| Congealing liquid | Water | Water | Water | Water | Water |
| Tenacity TB at Room Temperature (cN/dtex) | 3.50 | 5.97 | 3.99 | 4.82 | 6.29 |
| Elongation at Break EB at Room Temperature (%) | 13.92 | 7.44 | 14.77 | 9.12 | 11.92 |
| Tenacity HT at high temperature (cN/dtex) | 2.56 | 4.30 | 2.89 | 3.58 | 4.72 |
| Tenacity Retention Rate (HT/TB) (%) | 73.11 | 71.99 | 72.37 | 74.26 | 75.07 |
| Expression (1) | 13.8 | 16.9 | 16.2 | 15.2 | 22.8 |
| Expression (2) | 48.7 | 44.4 | 58.9 | 44.0 | 75.0 |
| Fineness of Raw Yarn (dtex) | 1840 | 1840 | 1840 | 1840 | 1840 |
| Number of Primary Twists (turns/10 cm) | 50 | 50 | 50 | 50 | 50 |
| Number of Final Twists (turns/10 cm) | 50 | 50 | 50 | 50 | 50 |
| Structure of Cord | 1840 dtex/2 | 1840 dtex/2 | 1840 dtex/2 | 1840 dtex/2 | 1840 dtex/2 |
| Run-Flat Driving Distance (INDEX) | 102 | 103 | 101 | 102 | 101 |
| State of Cord after Performing Run-Flat Driving | No Meltdown | No Meltdown | No Meltdown | No Meltdown | No Meltdown |
| Note | - | - | - | - | - |

| | Comparative Example 8 | Comparative Example 9 | Comparative Example 10 | Comparative Example 11 | Comparative Example 12 | Comparative Example 13 |
|---|---|---|---|---|---|---|
| Material | Reproduced Cellulose (Rayon) | Purified Cellulose | PET | NYLON 66 | Purified Cellulose | Purified Cellulose |
| Solvent | - | NMMO | - | - | C2mimDEP | C2mimAc |
| Congealing liquid | - | Water | - | - | Water | Water |
| Tenacity TB at Room Temperature (cN/dtex) | 4.78 | 4.66 | 6.88 | 7.85 | 6.74 | 4.93 |
| Elongation at Break EB at Room Temperature (%) | 10.07 | 5.5 | 15.97 | 19.72 | 12.5 | 21.2 |
| Tenacity HT at high temperature (cN/dtex) | 3.34 | 3.63 | 4.49 | 4.64 | 5.05 | 3.70 |
| Tenacity Retention Rate (HT/TB) (%) | 69.89 | 77.81 | 65.21 | 59.09 | 74.89 | 75.02 |
| Expression (1) | 15.9 | 11.3 | 29.1 | 37.0 | 25.1 | 24.1 |
| Expression (2) | 48.1 | 25.6 | 109.9 | 154.8 | 84.3 | 104.5 |
| Fineness of Raw Yarn (dtex) | 1840 | 1840 | 1670 | 1400 | 1840 | 1840 |
| Number of Primary Twists (turns/10 cm) | 50 | 50 | 40 | 40 | 50 | 50 |
| Number of Final Twists (turns/10 cm) | 50 | 50 | 40 | 40 | 50 | 50 |
| Structure of Cord | 1840 dtex/2 | 1840 dtex/2 | 1670 dtex/2 | 1400 dtex/2 | 1840 dtex/2 | 1840 dtex/2 |
| Run-Flat Driving Distance (INDEX) | 100 | 86 | 82 | 81 | - | - |
| State of Cord after Performing Run-Flat Driving | No Meltdown | No Meltdown | Meltdown | Meltdown | - | - |
| Note | - | - | - | - | The amount of fiber required to manufacture a tire could not be obtained. | |

Examples 18 to 23 and Comparative examples 14 to 16

[Manufacturing of Multifilament]

Dissolved cellulose solution in which pulp was dissolved in 1-ethyl-3-methyl imidazolium diethyl phosphate (C2mimDEP) or N-methyl morpholine-N-oxide (NMMO) was filtered and degassed. Subsequently, the dissolved cellulose solution was extruded by an extruder in a coagulating bath (in a water bath) after being heated to a spinning temperature, and thus a multifilament (fibers) used in cords 1 to 5 and cords 8 to 10 shown in Table 1 was obtained through a cleaning process and a drying process. Commercialized products were used for cord 6 (NYLON 66) and cord 7.

Properties of the multifilament (the fibers) used in each Example and each Comparative Example were measured by the following test methods, and results thereof are shown in Table 4.

(1) Raw Yarn Fineness

100 m of multifilament was sampled, was dried at 130°C for 30 minutes, and then was cooled to room temperature in a drying desiccator, and then the weight was determined. 1 g per 10,000 m was set to 1 dtex, and thus fineness was calculated from a weight of 100 m.

(2) Tenacity and Elongation at Break (TB and EB) of Raw Yarn

Fibers obtained by performing false twisting 4 times per 10 cm of the multifilament were subjected to a tensile test by using a tensile tester. Tenacity was obtained by dividing breaking tenacity by the fineness, and was measured at room temperature (25°C). Elongation at break was a degree of elongation at the time of being broken.

(3) Elastic Modulus of Raw Yarn at Room Temperature (Er)

Fibers obtained by performing false twisting 4 times per 10 cm of the multifilament were subjected to a tensile test at room temperature (25°C) by using a tensile tester. Elongation at break was a degree of elongation at the time of being broken, and an initial elastic modulus was obtained from a gradient of a tangential line of a stress-strain curve when the elongation at room temperature (25°C) was 0.5 to 0.7%. In addition, a unit of the initial elastic modulus was [cN/dtex·%], and in the present invention, the unit of the initial elastic modulus was defined as [cN/dtex].

(4) Measuring Method of Elastic Modulus Retention Rate (Eh/Er) of Raw Yarn

An elastic modulus was measured by using a viscoelasticity tester at room temperature (25°C) under conditions of a rate of temperature increase of 3°C/min, a frequency of 10 Hz, a static load of 0.5 cN/dtex, and dynamic distortion of 0.1%. An elastic modulus retention rate (Eh/Er) (%) was obtained from a percentage ratio of the elastic modulus at 25°C and the elastic modulus at 150°C.

As shown in Table 4, the multifilament (the fibers) used for cords 8 and 9 did not satisfy the expression (2), and it was not possible to produce a cord material of a required amount for manufacturing a tire, and thus productivity was degraded.

In addition, the cord material used for cord 5 did not satisfy the expression (1) and the expression (3), and the multifilament used for cords 6 and 7 did not satisfy the expression (2), the expression (3), and a predetermined elastic modulus retention rate (Eh/Er) (%).

[Manufacturing of Cord]

The obtained multifilament was primarily twisted, and was finally twisted by combining two primarily twisted multifilaments, and then a cord of each Example and each Comparative Example was manufactured. The number of primary twists and the number of final twists are shown in Table 4.

[Manufacturing of Dip Cord]

The cord was immersed in a resorcin-formalin-latex (RFL) adhesive agent, was subjected to a dip treatment, and then was subjected to a heat treatment including a drying process and a baking process. The drying process was performed at 150°C for 150 seconds with tensile force of $1\times10^{-3}$ N/dtex. The baking process was performed at the same temperature for the same time with the same tensile force as that of the drying process after the drying process was performed, and a dip cord was manufactured.

[Table 4]

| | Cord 1 | Cord 2 | Cord 3 | Cord 4 | Cord 5 |
|---|---|---|---|---|---|
| Material | Purified Cellulose | Purified Cellulose | Purified Cellulose | Purified Cellulose | Purified Cellulose |
| Solvent | C2mimDEP | C2mimDEP | C2mimDEP | C2mimDEP | NMMO |
| Solidifying Liquid | Water | Water | Water | Water | Water |
| Tenacity TB at Room Temperature (cN/dtex) | 3.48 | 4.01 | 4.87 | 6.31 | 4.71 |
| Elongation at Break EB at Room Temperature (%) | 13.54 | 13.93 | 10.32 | 12.01 | 5.32 |
| Expression (1) | 13.49 | 15.78 | 16.39 | 22.98 | 11.23 |
| Expression (2) | 47.12 | 55.86 | 50.26 | 75.78 | 25.06 |
| Expression (3) | 20.80 | 20.60 | 14.80 | 17.40 | 8.30 |
| Initial Elastic Modulus Er at Room Temperature ([cN/dtex]/%) | 2.45 | 2.38 | 2.31 | 2.37 | 2.12 |
| Elastic Modulus Retention Rate (Eh/Er) (%) | 87 | 91 | 86 | 89 | 78 |
| Fineness of Raw Yarn (dtex) | 1840 | 1840 | 1840 | 1840 | 1840 |
| Structure of Cord | 1840/2 | 1840/2 | 1840/2 | 1840/2 | 1840/2 |
| Number of Primary Twists (turns/10 cm) | 50 | 50 | 50 | 50 | 50 |
| Number of Final Twists (turns/10 cm) | 50 | 50 | 50 | 50 | 50 |
| Productivity | No Problem | No Problem | No Problem | No Problem | No Problem |

| | Cord 6 | Cord 7 | Cord 8 | Cord 9 | Cord 10 |
|---|---|---|---|---|---|
| Material | NYLON 66 | Polyester | Purified Cellulose | Purified Cellulose | Purified Cellulose |
| Solvent | - | - | C2mimDEP | C2mimDEP | C2mimAc |
| Solidifying Liquid | - | - | Water | Water | Water |
| Tenacity TB at Room Temperature (cN/dtex) | 7.73 | 6.79 | 6.78 | 4.79 | 8.19 |
| Elongation at Break EB at Room Temperature (%) | 18.47 | 15.84 | 12.71 | 21.80 | 4.83 |
| Expression (1) | 35.22 | 28.56 | 25.43 | 23.79 | 18.60 |
| Expression (2) | 142.77 | 107.55 | 86.17 | 104.42 | 39.60 |
| Expression (3) | 5.20 | 10.40 | 18.70 | 30.30 | 10.60 |
| Initial Elastic Modulus Er at Room Temperature ([cN/dtex]/%) | 0.48 | 1.15 | 2.32 | 2.42 | 2.91 |
| Elastic Modulus Retention Rate (Eh/Er) (%) | 43 | 49 | 88 | 87 | 86 |
| Fineness of Raw Yarn (dtex) | 1400 | 1670 | 1840 | 1840 | 1840 |
| Structure of Cord | 1400/2 | 1670/2 | 1840/2 | 1840/2 | 1840/2 |
| Number of Primary Twists (turns/10 cm) | 40 | 40 | 50 | 50 | 50 |
| Number of Final Twists (turns/10 cm) | 40 | 40 | 50 | 50 | 50 |
| Productivity | (Commercialized Product) | (Commercialized Product) | Small amount of fibers: possible Required amount for manufacturing a tire: impossible | Small amount of fibers: possible Required amount for manufacturing a tire: impossible | No Problem |

[Manufacturing of Carcass Ply]

The dip cord was calendered with coating rubber, and a carcass ply material was manufactured.

[Preparation of Belt Material]

The dip cord was calendered by the coating rubber, and a belt material (a circumferential spiral belt layer, and a crossing belt layer) was manufactured.

[Manufacturing of Tire]

By using the carcass ply material and/or the belt material, a tire for a motorcycle of 190/50ZR17 was prepared through ordinary casting, and a vulcanization process.

Tire properties of each Example and each Comparative Example were measured by the following test methods, and results thereof are shown in Table 2.

(1) Steering Stability

The tire of each Example and each Comparative Example was mounted on a motorcycle, a real vehicle feeling test was performed at a velocity of 60 to 200 km/hr, marks of 1 to 10 were applied to items such as (i) straight advance stability, (ii) turning stability, (iii) rigidity feeling, and (iv) handling, and the marks of the respective items were averaged, and thus steering stability was evaluated.

Furthermore, the evaluation was performed by two expert riders, an average of marks of the two riders was obtained, and the tire of Comparative Example 14 was indexed as 100. As the index increased, the steering stability became excellent.

(2) Ride Quality Test

A protruding object having a width of 5 cm and a height of 1.3 cm was attached onto an iron drum having a diameter of 3 m, and the tire was brought into contact with the iron drum, and then the drum was rotated. Then, vertical direction vibration when the tire crossed over the protruding object was measured by an accelerometer as a force to a tire-attaching shaft. At this time, an amplitude of a primary period was obtained from a recorded waveform, and a inverse number of an amplitude of the tire of Comparative Example 15 was set to 100, and displayed in index.

As the index increased, the amplitude decreased, and the ride quality became excellent.

(3) Durability Test

The tire of each Example and each Comparative Example was left in a room at 30 ± 2°C for 24 hours after being adjusted to a maximum air pressure of JIS standard, and the air pressure was adjusted again. Then, a load which was two times larger than a maximum load of JIS standard was applied to the tire, and a driving test was performed on a drum having a diameter of approximately 1.7 m at a velocity of 60 km/h.
At this time, a distance travelled until occurrence of failure was measured, and the driving distance up to the failure occurrence of the tire of Comparative Example 14 was set to 100 and displayed in index. As the index increased, the driving distance up to the failure occurrence increased, and thus durability at a high load became excellent.

[Table 5]

| | Comparative Example 14 | Comparative Example 15 | Comparative Example 16 | Example 18 | Example 19 | Example 20 | Example 21 | Example 22 | Example 23 |
|---|---|---|---|---|---|---|---|---|---|
| Carcass Material | Cord 6 | Cord 7 | Cord 5 | Cord 1 | Cord 2 | Cord 3 | Cord 4 | Cord 4 | Cord 6 |
| Belt Material 1 | - | - | Aramid | Cord 1 | - | Aramid | Cord 4 | - | - |
| Belt Structure 1 | - | - | Crossing Layer | Crossing Layer | - | Crossing Layer | Crossing Layer | - | - |
| Belt Material 2 | Steel | Steel | - | - | Cord 2 | - | Cord 4 | Steel | Cord 10 |
| Belt Structure 2 | Spiral | Spiral | - | - | Spiral | - | Spiral | Spiral | Spiral |
| Steering Stability (INDEX) | 100 | 110 | 130 | 150 | 140 | 130 | 140 | 130 | 120 |
| Ride Quality (INDEX) | 100 | 100 | 120 | 120 | 130 | 130 | 130 | 110 | 120 |
| Durability of Tire (INDEX) | 100 | 90 | 70 | 130 | 130 | 140 | 140 | 130 | 110 |

As shown in Table 5, the tires of Examples 18 to 23 in which the cord manufactured from the cord material (the fibers) satisfying the expression (1), the expression (2), the expression (3), and the predetermined elastic modulus retention rate (Eh/Er) (%) was used for any one of the carcass material and the belt material had excellent steering stability, excellent ride quality, and excellent durability.

Further, the tire of Example 21 in which the cord having the properties described above was used for both of the carcass material and the belt material, and the cord having the properties described above was used for both of the circumferential direction belt layer and the crossing belt layer had especially excellent steering stability, especially excellent ride quality, and especially excellent durability.

In contrast, in the tire of Comparative Examples 14 to 16 using the cord manufactured from the cord material (the fibers) which did not satisfy any one of the cord the expression (1), the expression (2), the expression (3), and the predetermined elastic modulus retention rate (Eh/Er) (%), and any one of the steering stability, the ride quality, and the durability were degraded compared to Examples.

From the results described above, it is clear that since the purified polysaccharide fibers of the present invention satisfy the expression (1) and the expression (2), satisfy the expression (3), and have the elastic modulus retention rate (Eh/Er) (%) in a predetermined range, the tire of the present invention using the purified polysaccharide fibers has excellent steering stability, excellent ride quality, and excellent durability.

Examples 24 to 29 and Comparative Examples 17 and 18

[Manufacturing of Multifilament]

Dissolved cellulose solution in which pulp was dissolved in 1-ethyl-3-methyl imidazolium diethyl phosphate (C2mimDEP) or 1-ethyl-3-methyl imidazolium acetate (C2mimAc) was filtered and degassed. Subsequently, the dissolved cellulose solution was extruded by an extruder in a coagulating bath (in a solidifying tank) after being heated to a spinning temperature, and thus multifilaments (fibers) of Examples 24 to 29 shown in Table 6 were obtained through a cleaning process and a drying process. Commercialized products were used for nylon (NYLON 66) of Comparative Example 17 and the polyester of Comparative Example 18.

Properties of the multifilament (the fibers) of each Example and each Comparative Example were measured by the following test methods, and results thereof are shown in Table 6. Furthermore, in Table 6, congealing liquid indicates solidifying liquid.

(1) Raw Yarn Fineness

100 m of the multifilament (raw yarn) was sampled, was dried at 130°C for 30 minutes, and then was cooled to room temperature in a drying desiccator, and then the weight was determined. 1 g per 10,000 m was set to 1 dtex, and thus fineness was calculated from a weight of 100 m.

(2) Measuring Method of Initial Elastic Modulus and Elongation at Break

Fibers obtained by performing false twisting 4 times per 10 cm of the multifilament (the raw yarn) were subjected to a tensile test at room temperature (25°C) by using a tensile tester. Elongation at break was a degree of elongation at the time of being broken, and an initial elastic modulus was obtained from a gradient of a tangential line of a stress-strain curve when the elongation at room temperature (25°C) was 0.5 to 0.7%. In addition, a unit of the initial elastic modulus was [cN/dtex·%], and in the present invention, the unit of the initial elastic modulus was defined as [cN/dtex].

(3) High Temperature Creep Load Dependency

A weight of 4 cN/dtex was suspended from the fibers obtained by performing false twisting 4 times per 10 cm of the multifilament at 80°C, and a creep amount (%) was measured. Then, the creep amount (%) of Comparative Example 1 was set to 100 and displayed in index. Similarly, the creep amount (%) at the time of suspending a weight of 2 cN/dtex was displayed in index, and a difference between the creep amount (%) at the time of applying a load of 4 cN/dtex and the creep amount at the time of applying a load of 2 cN/dtex was obtained.

[Manufacturing of Cord]

The obtained multifilament (the raw yarn) was primarily twisted, and was finally twisted by combining two primarily twisted multifilaments, and then a cord was manufactured. The number of primary twists and the number of final twists are shown in Table 6.

[Manufacturing of Dip Cord]

The cord was immersed in a resorcin-formalin-latex (RFL) adhesive agent, was subjected to a dip treatment, and then was subjected to a heat treatment including a drying process and a baking process. The drying process was performed at 150°C for 150 seconds with tensile force of $1\times10^{-3}$ N/dtex. The baking process was performed at the same temperature for the same time with the same tensile force as that of the drying process after the drying process was performed, and a dip cord was prepared.

[Manufacturing of Tire Belt Reinforcement Layer]

The dip cord was calendered with coating rubber, and a belt reinforcement layer was manufactured.

[Manufacturing of Tire]

By using the belt reinforcement layer, a tire of 185/65R14 was manufactured through ordinary casting, and a vulcanization process.

Tire properties of each Example and each Comparative Example were measured by the following test methods, and results thereof are shown in Table 6.

(1) High-speed Durability Test

The tire of each Example and each Comparative Example was subjected to rim assembling at an ordinary pressure, and was set to a prescribed internal pressure of JATMA. Then, a load which is two times larger than a prescribed load was applied to the tire, and a driving test was performed on a steel drum having a diameter of 3 m by increasing a velocity by 10 km/h every 15 minutes.

At this time, the velocity immediately before the tire was damaged was measured, and the velocity immediately before the tire of Comparative Example 1 was damaged was set to 100 and displayed in index. As the index increased, high-speed durability up to failure occurrence became excellent.

(2) Flat Spot Performance Test

The tire of each Example and each Comparative Example was subjected to rim assembling at an ordinary pressure, and was driven for a predetermined period of time. Then, a load was applied to the tire which was heated to a high temperature, and the tire was left until the tire was completely cooled, and then a deformation degree of a tread portion of the tire was measured. A flat spot amount of Comparative Example 17 was set to 100 and displayed in index. As a value of the index increased, it was preferable that the flat spot amount be decreased.

[Table 6]

| | Comparative Example 17 | Comparative Example 18 | Example 24 | Example 25 | Example 26 | Example 27 | Example 28 | Example 29 |
|---|---|---|---|---|---|---|---|---|
| Material | Nylon | Polyester | Purified Cellulose | Purified Cellulose | Purified Cellulose | Purified Cellulose | Purified Cellulose | Purified Cellulose |
| Solvent | - | - | C2mimDEP | C2mimAc | C2mimDEP | C2mimDEP | C2mimDEP | C2mimDEP |
| Congealing liquid | - | - | Water | Water | Water | Water | Water | Water |
| Elongation at Break at Room Temperature (EB25) (%) | 7.81 | 6.81 | 3.17 | 4.10 | 6.17 | 5.96 | 5.09 | 6.11 |
| Initial Elastic Modulus Er at Room Temperature ([cN/dtex]/%) | 0.52 | 1.23 | 4.13 | 3.32 | 2.42 | 2.90 | 3.37 | 4.04 |
| High Temperature Creep Load Dependency (%) | 2.84 | 2.24 | 1.42 | 1.58 | 1.67 | 1.62 | 1.52 | 1.39 |
| Fineness of Raw Yarn (dtex) | 1400 | 1100 | 1840 | 1840 | 1840 | 1840 | 1840 | 1840 |
| Structure of Cord | 1400/2 | 1100/2 | 1840/2 | 1840/2 | 1840/2 | 1840/2 | 1840/2 | 1840/2 |
| Number of Primary Twists (turns/10 cm) | 25 | 25 | 25 | 25 | 25 | 25 | 25 | 25 |
| Number of Final Twists (turns/10 cm) | 25 | 25 | 25 | 25 | 25 | 25 | 25 | 25 |
| High-speed Durability (INDEX) | 100 | 90 | 120 | 120 | 120 | 130 | 130 | 130 |
| Flat Spot Performance (INDEX) | 100 | 110 | 140 | 140 | 130 | 130 | 140 | 150 |

As shown in Table 6, the tires of Examples 24 to 29 using the cord manufactured from the multifilament (the raw yarn) which satisfied the expression (3) had excellent high-speed durability.

Further, the tires of Examples 24 to 29 using the cord manufactured from the multifilament (the raw yarn) which satisfied the predetermined high temperature creep load dependency had excellent flat spot performance.

In contrast, in the tires of Comparative Examples 17 and 18 using the cord manufactured from the multifilament (the raw yarn) which did not satisfy the expression (3) for the reinforce belt layer, the high-speed durability was degraded compared to Examples.

Further, in the tires of Comparative Examples 17 and 18 using the cord manufactured from the multifilament (the raw yarn) which did not satisfy the predetermined high temperature creep load dependency, the flat spot performance was degraded.

From the results described above, it is clear that since in the purified polysaccharide fibers of the present invention, the elongation at break (%) of the raw yarn at 25°C and the initial elastic modulus (%) of the raw yarn satisfy the expression (3), the tire of the present invention using the purified polysaccharide fibers has excellent high-speed durability.

Reference Signs List

1...tire, 2... bead portion, 3... side wall portion, 4... tread portion, 5... carcass, 5a...first carcass portion, 5b...second carcass portion, 6...fiber cord, 10...reinforcement rubber layer, 13...belt layer, 13a...first belt layer, 13b...second belt layer, 14C...crown portion, 20... circumferential spiral belt layer, 20C... center side spiral belt layer, 20L, 20R... shoulder side spiral belt layer, 21... rubber-cord composite structure, 24, 25A, 25B...crossing belt layer, CL...tire equatorial plane, TS...tread shoulder portion, 34... belt reinforcement layer

## Claims

**1.** A cord formed by bringing a polysaccharide solution which is formed by dissolving a polysaccharide raw material in a liquid including an ionic liquid in contact with a solidifying liquid, and by twisting raw yarn which is purified polysaccharide fibers formed by spinning polysaccharides,
wherein a relationship between tenacity TB (cN/dtex) of the raw yarn at 25°C and elongation at break EB (%) of the raw yarn at 25°C satisfies the following expression (1) and the following expression (2), and
a twisted yarn tenacity utilization rate (CT/TB) at the time of setting cord tenacity at 25°C to CT (cN/dtex) when the raw yarn is twisted to be a cord is greater than or equal to 70%.

$$\frac{TB}{EB^{-0.52}} \geq 13 \quad \cdots (1)$$

$$TB \times EB \leq 80 \quad \cdots (2)$$

**2.** The cord according to Claim 1,
wherein the cord is formed by twisting the raw yarn which is the purified polysaccharide fibers and fibers of a material different from the purified polysaccharide fibers, and
a relationship between a raw yarn initial elastic modulus Er (%) which is calculated from a slope of stress at the time of elongation of 0.6 to 0.9% at 25°C and elongation at break EB (%) of the raw yarn at 25°C satisfies the following expression (3).

$$\frac{Er}{EB^{-0.82}} \geq 10.5 \quad (3)$$

**3.** The cord according to Claim 1,
wherein a tenacity retention rate (HT/TB) of the raw yarn at the time of setting tenacity of the raw yarn at 150°C to HT (cN/dtex) is 70 to 100 (%).

**4.** The cord according to Claim 1, wherein a relationship between an elastic modulus Er (%) of the raw yarn at 25°C and the elongation at break EB (%) of the raw yarn at 25°C satisfies the following expression (3), and a percentage ratio ([Eh / Er] × 100) of an elastic modulus Eh (%) of the raw yarn at 150°C to Er (%) is 75 to 100 (%).

$$\frac{Er}{EB^{-0.82}} \geq 10.5 \quad \cdots (3)$$

**5.** The cord according to Claim 1, wherein a difference between a creep amount (%) of the raw yarn at the time of applying a load of 4 cN/dtex at 80°C and a creep amount of the raw yarn at the time of applying a load of 2 cN/dtex at 80°C is less than or equal to 2.0 (%).

**6.** The cord according to Claim 1, wherein the tenacity TB of the raw yarn at 25°C is greater than or equal to 3.8 cN/dtex.

**7.** The cord according to Claim 6, wherein the tenacity TB of the raw yarn at 25°C is greater than or equal to 5.1 cN/dtex.

**8.** The cord according to Claim 7, wherein the tenacity TB of the raw yarn at 25°C is greater than or equal to 5.4 cN/dtex.

**9.** The cord according to Claim 1, wherein the elongation at break EB (%) of the raw yarn at 25°C is greater than or equal to 8.8 %.

**10.** The cord according to Claim 9, wherein the elongation at break EB (%) of the raw yarn at 25°C is greater than or equal to 10.0%.

**11.** The cord according to Claim 1, wherein the ionic liquid is composed of a cationic moiety and an anionic moiety, and the cationic moiety is at least one selected from the group consisting of an imidazolinium ion, a pyridinium ion, an ammonium ion, and a phosphonium ion.

**12.** The cord according to Claim 11, wherein the cationic moiety is an imidazolinium ion shown by the following general formula (1).

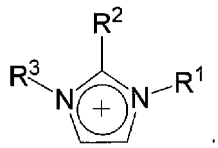

··· (1)

wherein $R^1$ indicates a cyano group, an alkyl group having 1 to 4 carbon atoms, or an alkenyl group having 2 to 4 carbon atoms, $R^2$ indicates a hydrogen atom or a methyl group, and $R^3$ indicates a cyano group, an alkyl group having 1 to 8 carbon atoms, or an alkenyl group having 2 to 8 carbon atoms.

**13.** The cord according to Claim 11, wherein the anionic moiety is at least one selected from the group consisting of a chloride ion, a bromide ion, a formate ion, an acetate ion, a propionate ion, an L-lactate ion, a methyl carbonate ion, an amino acetate ion, an amino propionate ion, a dimethyl carbamate ion, a hydrogen sulfate ion, a methyl sulfate ion, an ethyl sulfate ion, a methane sulfonate ion, a dimethyl phosphate ion, a diethyl phosphate ion, a methyl phosphonate ion, a phosphinate ion, a thiocyanate ion, and a dicyanamide ion.

**14.** The cord according to Claim 1, wherein the ionic liquid is 1-ethyl-3-methyl imidazolium diethyl phosphate.

**15.** The cord according to Claim 2,

wherein the fibers of the different material are organic fibers of which thermal shrinkage stress at 180°C is greater than or equal to 0.20 cN/dtex.

**16.** The cord according to Claim 2,
wherein total fineness is 1,000 to 10,000 dtex.

**17.** A rubber-cord composite structure formed by compositing the cord according to Claim 1, and a rubber material.

**18.** The rubber-cord composite structure according to Claim 17,
wherein thermal shrinkage stress (cN/dtex) of a hybrid cord extracted from a vulcanized rubber-cord composite structure at 180°C is greater than or equal to 0.10 cN/dtex.

**19.** A tire using the rubber-cord composite structure according to Claim 17.

**20.** The tire according to Claim 19,
wherein the rubber-cord composite structure according to Claim 17 is used as a carcass ply.

**21.** The tire according to Claim 20,
wherein the tire is a run-flat tire including
a pair of bead portions and a pair of side wall portions,
a tread portion continuing to the pair of side wall portions,
a carcass ply reinforcing each portion by extending in a toroidal shape between the pair of bead portions, and
a pair of side reinforcement rubber layers with a crescent-like cross-section arranged inside the carcass of the side wall portion.

**22.** The tire according to Claim 19,
wherein the tire is a tire for a motorcycle.

**23.** The tire according to Claim 22,
wherein the tire includes
a pair of right and left bead portions,
a carcass layer formed of a ply of at least one layer extending in a toroidal shape between the bead portions, and
a belt layer of at least one layer arranged in a crown portion of the carcass layer, and
the rubber-cord composite structure according to Claim 18 is used in the carcass layer and/or the belt layer.

**24.** The tire according to Claim 23,
wherein the belt layer includes a circumferential spiral belt layer and/or a crossing belt layer,
the circumferential spiral belt layer includes the rubber-cord composite structure of at least one layer in which the cords extending in a spiral shape in a tire circumferential direction are arranged in parallel, and
the crossing belt layer has the rubber-cord composite structure of at least two layers in which the cords extending at an angle to a tire equatorial plane are arranged in parallel.

**25.** The tire according to Claim 19,
wherein the tire includes
a pair of right and left bead portions and a pair of right and left side wall portions,
a carcass layer extending in a toroidal shape over the pair of right and left bead portions,
a belt layer of at least one sheet arranged outside a crown portion of the carcass layer in a radial direction,
a belt reinforcement layer arranged outside the belt layer in an approximately tire equatorial direction, and
a tread portion arranged outside the belt reinforcement layer,
the belt reinforcement layer includes the rubber-cord composite structure in which the cords are arranged in parallel, and
the belt reinforcement layer is arranged in at least both end portions of the belt layer or the entire surface of the belt layer in an equatorial direction of a tire cross-section to be wound at 0° with respect to a tire circumferential direction.

*FIG. 1*

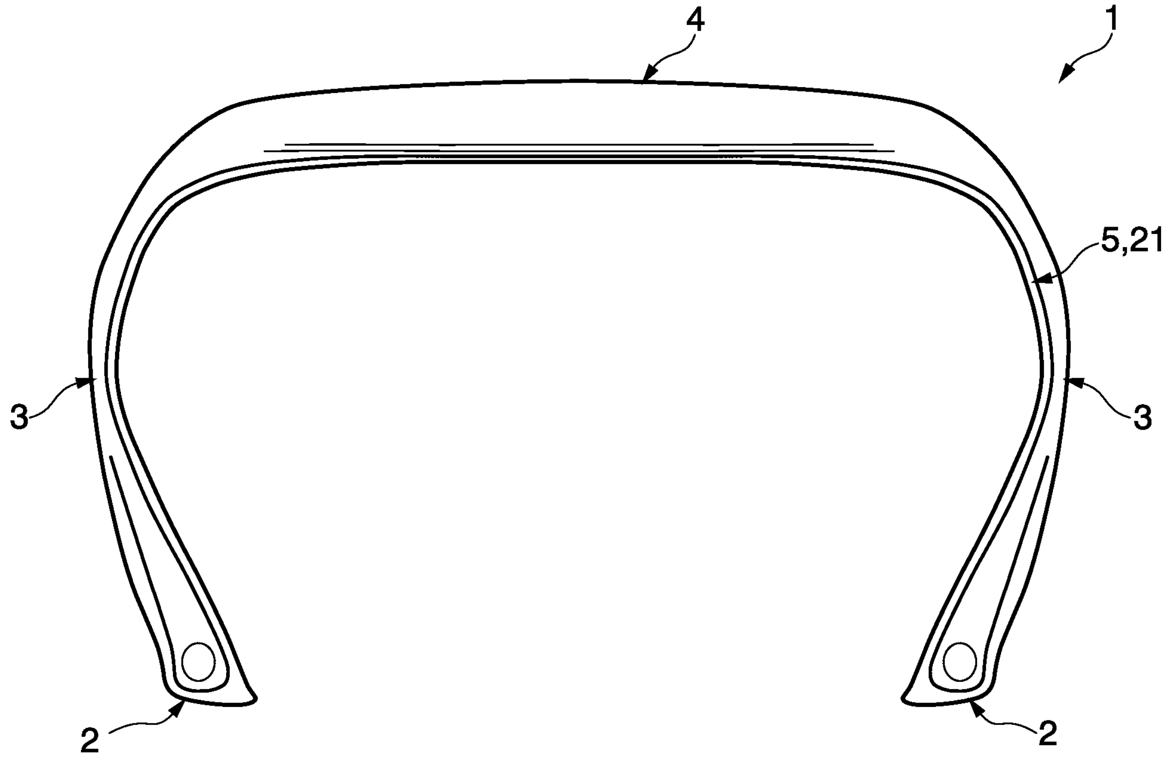

FIG. 2

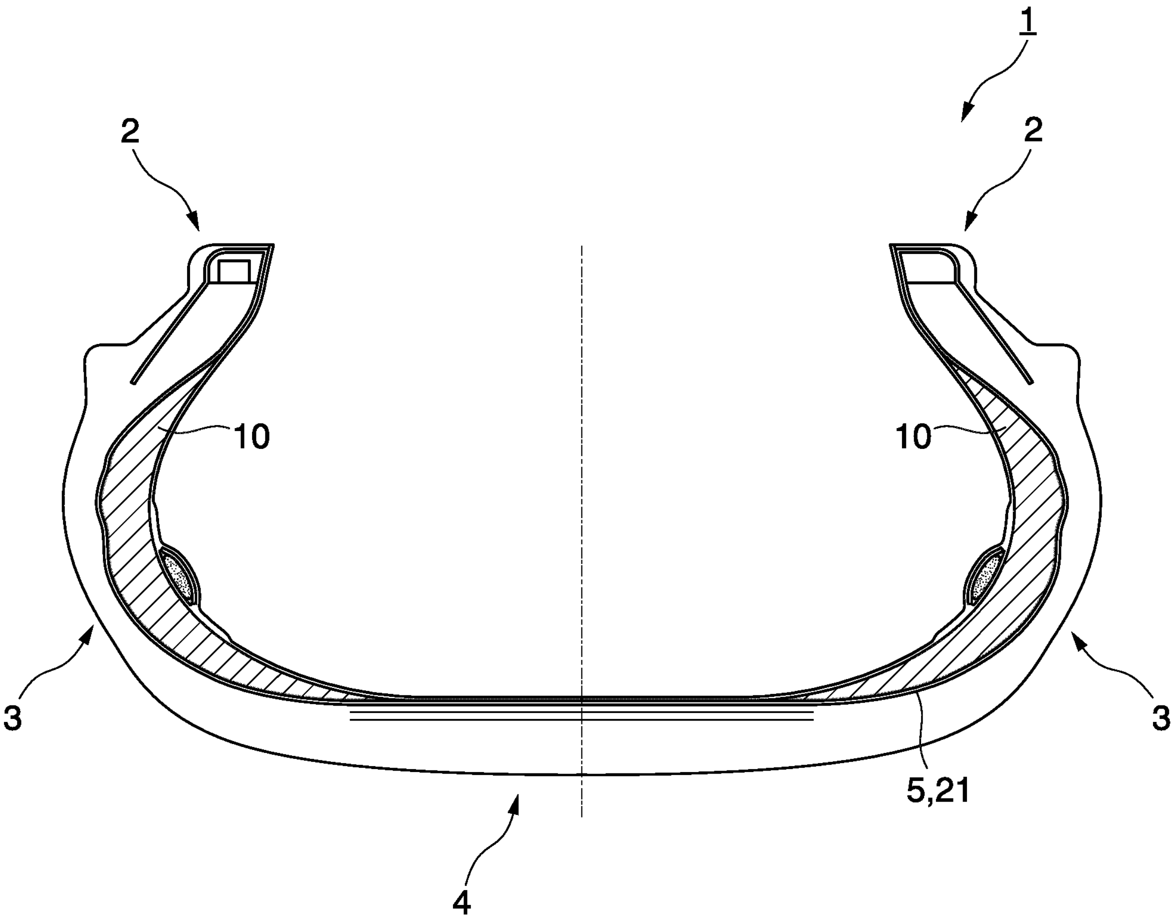

*FIG. 3*

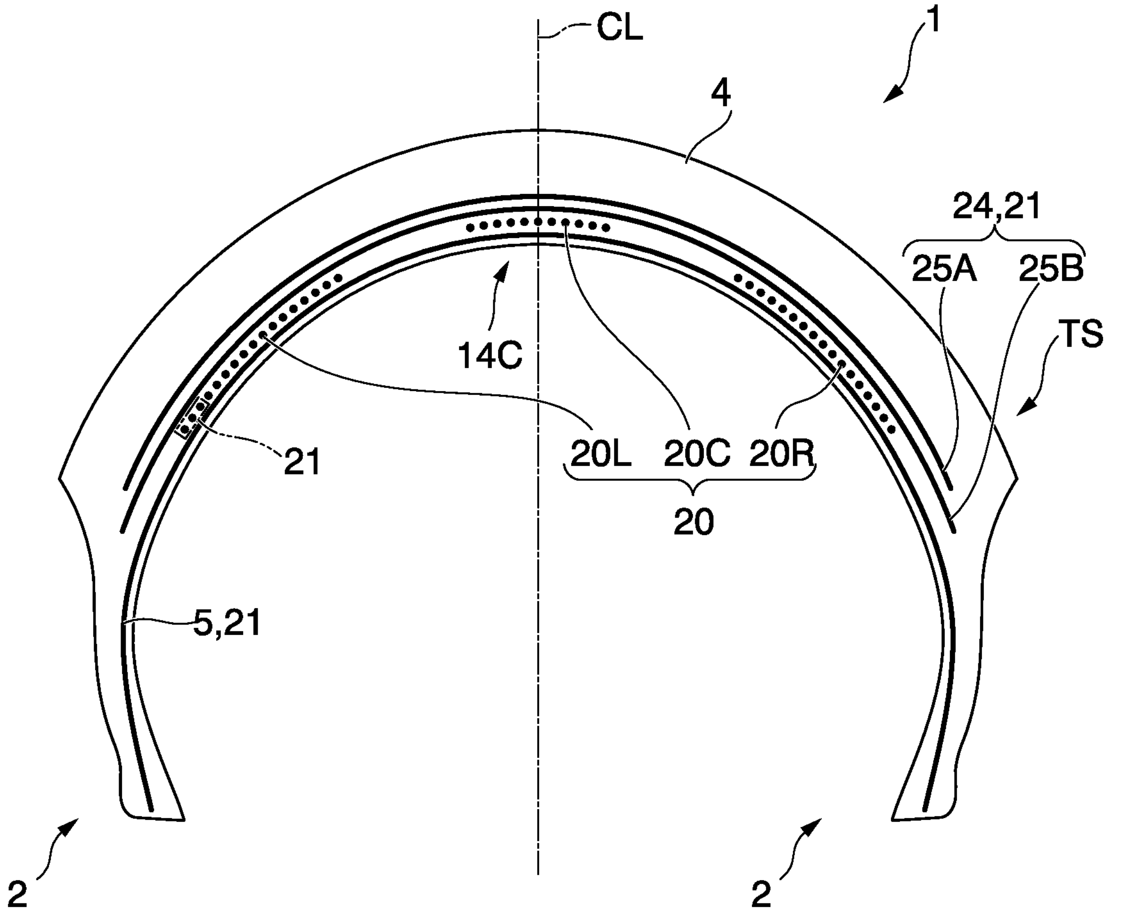

*FIG. 4*

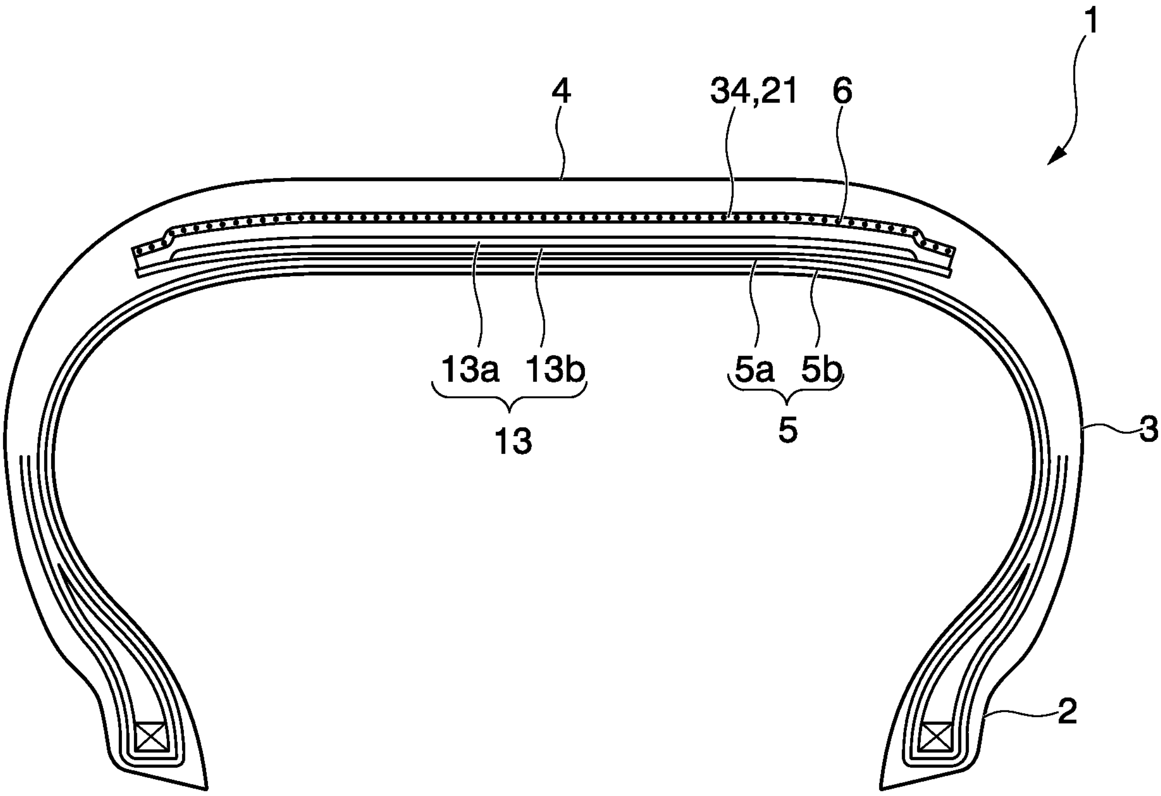

**INTERNATIONAL SEARCH REPORT**

International application No.
PCT/JP2013/064047

A. CLASSIFICATION OF SUBJECT MATTER
*D01F2/00*(2006.01)i, *B60C9/00*(2006.01)i, *D02G3/48*(2006.01)i

According to International Patent Classification (IPC) or to both national classification and IPC

B. FIELDS SEARCHED

Minimum documentation searched (classification system followed by classification symbols)
D01F2/00-2/30, B60C9/00-9/30, D02G3/48

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2012/008401 A1 (Bridgestone Corp.), 19 January 2012 (19.01.2012), paragraph [0047]; experimental example 2, samples 11 to 14 & JP 2012-21048 A | 1-25 |
| Y | JP 2005-23508 A (Hyosung Corp.), 27 January 2005 (27.01.2005), claims & EP 1493850 A1 claims & US 2005/0066646 A1 & WO 2005/001174 A1 & DE 602004022895 D & KR 10-0486811 B1 & KR 10-2005-0020416 A & CN 1576416 A & AT 441743 T & AU 2003273104 A | 1-25 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 August, 2013 (01.08.13) | 13 August, 2013 (13.08.13) |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.
PCT/JP2013/064047

C (Continuation). DOCUMENTS CONSIDERED TO BE RELEVANT

| Category* | Citation of document, with indication, where appropriate, of the relevant passages | Relevant to claim No. |
|---|---|---|
| P,X | WO 2012/074019 A1 (Bridgestone Corp.), 07 June 2012 (07.06.2012), claims (Family: none) | 1-25 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006188806 A
- US 1943176 A
- JP S60144322 B
- JP 4242768 B
- US 20080269477 A
- CN 101328626